# EUROPEAN PATENT APPLICATION

(11) **EP 4 485 054 A1**
(43) Date of publication of application: **01.01.2025**
(21) Application number: 22928974.9
(22) Date of filing: 27.12.2022
(51) Int. Cl.: G02F 1/065, G01J 1/02

(54) **ELECTRO-OPTIC POLYMER ELEMENT**

(30) Priority: 25.02.2022 JP 2022028213
(71) Applicant: NATIONAL INSTITUTE OF INFORMATION AND COMMUNICATIONS TECHNOLOGY, Tokyo 184-8795 (JP)
(72) Inventor: KAJI, Takahiro, Koganei-shi, Tokyo 184-8795 (JP); TOMINARI, Yukihiro, Koganei-shi, Tokyo 184-8795 (JP); YAMADA, Toshiki, Koganei-shi, Tokyo 184-8795 (JP); OTOMO, Akira, Koganei-shi, Tokyo 184-8795 (JP)
(74) Representative: De Clercq & Partners
(86) International application number: PCT/JP2022/048239
(87) International publication number: WO 2023/162459

(57) **Abstract**

An electro-optic polymer device (1) includes an optical waveguide (15) and a first antenna electrode (21). The optical waveguide (15) includes a core layer (17) formed of an electro-optic polymer. The first antenna electrode (21) includes a first upper antenna electrode (26) and a first lower antenna electrode (22). An electro-optic molecule of the electro-optic polymer is oriented along a normal direction of a first principal surface (15a) of the optical waveguide (15). In plan view of the first principal surface (15a), a first edge (27) of the first upper antenna electrode (26) and a second edge (23) of the first lower antenna electrode (22) each overlap with the core layer (17) or are at a distance of less than or equal to 20 µm from the core layer (17) in the width direction of the core layer (17).

## Description

### TECHNICAL FIELD

The present disclosure relates to an electro-optic polymer device.

### BACKGROUND ART

Takahiro Kaji et. al., "W-band optical modulators using electro-optic polymer waveguides and patch antenna arrays", Optics Express, issued on September 13, 2021, Vol. 29, No. 19, p. 29604-29614 (NPL 1) discloses an optical modulator including a substrate, a ground electrode, a lower clad layer, a core layer, an upper clad layer, and a plurality of pairs of rectangular antenna electrodes. The substrate includes a principal surface. The core layer is formed of an electro-optic polymer. The electro-optic polymer contains electro-optic molecules, and the electro-optic molecules are oriented in the normal direction of the principal surface of the substrate.

### CITATION LIST

### NON PATENT LITERATURE

NPL 1: Takahiro Kaji et. al., "W-band optical modulators using electro-optic polymer waveguides and patch antenna arrays", Optics Express, issued on September 13, 2021, Vol. 29, No. 19, p. 29604-29614

### SUMMARY OF INVENTION

### TECHNICAL PROBLEM

However, in the optical modulator of NPL 1, the plurality of pairs of rectangular antenna electrodes are arranged above the core layer. Therefore, when the plurality of pairs of rectangular antenna electrodes receive radio frequency (RF) electromagnetic waves, it is difficult to increase the component of the electric field applied from the plurality of pairs of rectangular antenna electrodes to the core layer along the orientation of the electro-optic molecules, and the optical modulation efficiency of the optical modulator is insufficient. The present disclosure has been made in view of the above-mentioned problems, and an object thereof is to provide an electro-optic polymer device with improved optical modulation efficiency.

### SOLUTION TO PROBLEM

An electro-optic polymer device of the present disclosure includes an optical waveguide and a first antenna electrode. The optical waveguide has a first principal surface and a second principal surface opposite to the first principal surface. The optical waveguide includes a core layer formed of an electro-optic polymer. The first antenna electrode includes a first upper antenna electrode and a first lower antenna electrode. The electro-optic polymer contains an electro-optic molecule. The electro-optic molecule is oriented along a normal direction of the first principal surface. The first upper antenna electrode is provided on the first principal surface. The first upper antenna electrode includes a first edge proximate to a center line of the core layer in a width direction of the core layer in plan view of the first principal surface. The width direction of the core layer is perpendicular to a longitudinal direction of the core layer in the plan view of the first principal surface. The first lower antenna electrode is provided on the second principal surface. The first lower antenna electrode includes a second edge proximate to the center line of the core layer in the plan view of the first principal surface. In the plan view of the first principal surface, a first center line of the first upper antenna electrode in the width direction of the core layer is shifted in a first width direction with respect to the center line of the core layer in the width direction of the core layer. The first width direction is one side of the width direction of the core layer. In the plan view of the first principal surface, a second center line of the first lower antenna electrode in the width direction of the core layer is shifted in a second width direction opposite to the first width direction with respect to the center line of the core layer. The second width direction is the other side of the width direction of the core layer. In the plan view of the first principal surface, the first edge overlaps with the core layer or is at a distance of less than or equal to 20 µm from the core layer in the width direction of the core layer. In the plan view of the first principal surface, the second edge overlaps with the core layer or is at a distance of less than or equal to 20 µm from the core layer in the width direction of the core layer. A first distance between the first upper antenna electrode and the core layer in the normal direction of the first principal surface is less than or equal to 20 µm. A second distance between the first lower antenna electrode and the core layer in the normal direction of the first principal surface is less than or equal to 20 µm.

### ADVANTAGEOUS EFFECTS OF INVENTION

With the electro-optic polymer device of the present disclosure, the optical modulation efficiency of the electro-optic polymer device can be improved.

### BRIEF DESCRIPTION OF DRAWINGS

Fig. 1 is a schematic plan view of an electro-optic polymer device of a first embodiment.
Fig. 2 is a schematic cross-sectional view of the electro-optic polymer device of the first embodiment at the section line II-II shown in Fig. 1.
Fig. 3 is a schematic cross-sectional view of the electro-optic polymer device of the first embodiment at the section line III-III shown in Fig. 1.
Fig. 4 is a schematic cross-sectional view showing one process of a method for producing the electro-optic polymer device of the first embodiment.
Fig. 5 is a schematic cross-sectional view showing the next process of the process shown in Fig. 4 in the method for producing the electro-optic polymer device of the first embodiment.
Fig. 6 is a schematic cross-sectional view showing the next process of the process shown in Fig. 5 in the method for producing the electro-optic polymer device of the first embodiment.
Fig. 7 is a schematic cross-sectional view showing the next process of the process shown in Fig. 6 in the method for producing the electro-optic polymer device of the first embodiment.
Fig. 8 is a schematic cross-sectional view showing one process of the method for preparing an electro-optic polymer layer with electro-optic molecules oriented, in the method for producing the electro-optic polymer device of the first embodiment.
Fig. 9 is a schematic cross-sectional view showing the next process of the process shown in Fig. 9 in the method for preparing the electro-optic polymer layer with electro-optic molecules oriented, in the method for producing the electro-optic polymer device of the first embodiment.
Fig. 10 is a schematic cross-sectional view showing the next process of the process shown in Figs. 7 and 9 in the method for producing the electro-optic polymer device of the first embodiment.
Fig. 11 is a schematic cross-sectional view showing the next process of the process shown in Fig. 10 in the method for producing the electro-optic polymer device of the first embodiment.
Fig. 12 is a schematic cross-sectional view showing the next process of the process shown in Fig. 11 in the method for producing the electro-optic polymer device of the first embodiment.
Fig. 13 is a schematic cross-sectional view showing the next process of the process shown in Fig. 12 in the method for producing the electro-optic polymer device of the first embodiment.
Fig. 14 is a schematic view describing the operation of the electro-optic polymer device of the first embodiment.
Fig. 15 is a schematic cross-sectional view of an electro-optic polymer device of a first variant of the first embodiment.
Fig. 16 is a schematic cross-sectional view of the electro-optic polymer device of the first variant of the first embodiment.
Fig. 17 is a schematic cross-sectional view of an electro-optic polymer device of a second variant of the first embodiment.
Fig. 18 is a schematic cross-sectional view of the electro-optic polymer device of the second variant of the first embodiment.
Fig. 19 is a schematic plan view of an electro-optic polymer device of a third variant of the first embodiment.
Fig. 20 is a schematic cross-sectional view of the electro-optic polymer device of the third variant of the first embodiment at the section line XX-XX shown in Fig. 19.
Fig. 21 is a schematic cross-sectional view of the electro-optic polymer device of the third variant of the first embodiment at the section line XXI-XXI shown in Fig. 19.
Fig. 22 is a schematic plan view of an electro-optic polymer device of a second embodiment.
Fig. 23 is a schematic cross-sectional view of the electro-optic polymer device of the second embodiment at the section line XXIII-XXIII shown in Fig. 22.
Fig. 24 is a schematic cross-sectional view of the electro-optic polymer device of the second embodiment at the section line XXIV-XXIV shown in Fig. 22.
Fig. 25 is a schematic cross-sectional view of an electro-optic polymer device of a variant of the second embodiment.
Fig. 26 is a schematic cross-sectional view of the electro-optic polymer device of the variant of the second embodiment.
Fig. 27 is a schematic plan view of an electro-optic polymer device of a third embodiment.
Fig. 28 is a schematic cross-sectional view of the electro-optic polymer device of the third embodiment at the section line XXVIII-XXVIII shown in Fig. 27.
Fig. 29 is a schematic cross-sectional view of the electro-optic polymer device of the third embodiment at the section line XXIX-XXIX shown in Fig. 27.

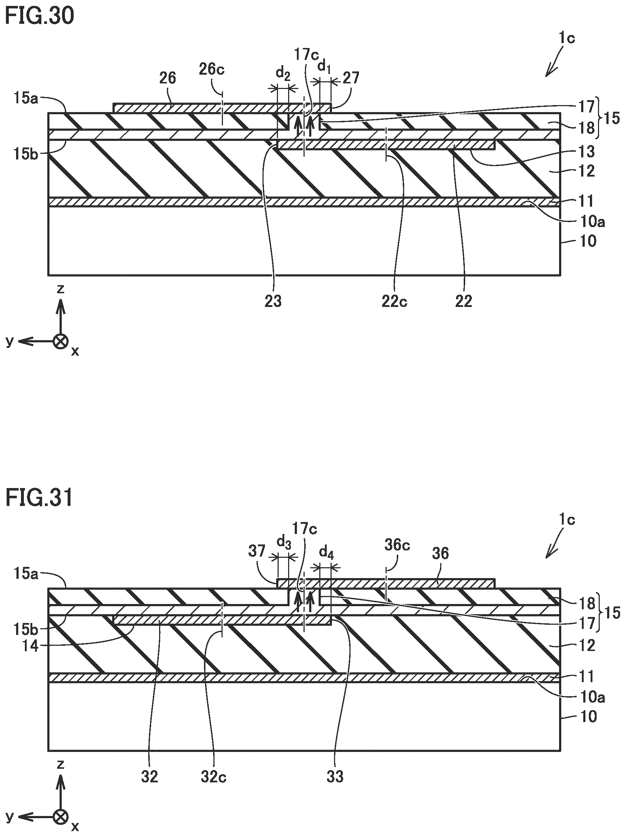

Fig. 30 is a schematic cross-sectional view of an electro-optic polymer device of a variant of the third embodiment.
Fig. 31 is a schematic cross-sectional view of the electro-optic polymer device of the variant of the third embodiment.
Fig. 32 is a schematic plan view of an electro-optic polymer device of a fourth embodiment.
Fig. 33 is a schematic plan view of an electro-optic polymer device of a variant of the fourth embodiment.
Fig. 34 is an upper surface microscopic image of the electro-optic polymer device of an example of the present disclosure.
Fig. 35 is a cross-sectional scanning electron microscope (SEM) image of the electro-optic polymer device of the example of the present disclosure.
Fig. 36 is a diagram showing the spectrum of output light from the electro-optic polymer device in the example of the present disclosure.

### DESCRIPTION OF EMBODIMENTS

Embodiments will be described below. Note that identical configurations are denoted with the identical reference number, and the description thereof is not repeated.

### (First embodiment)

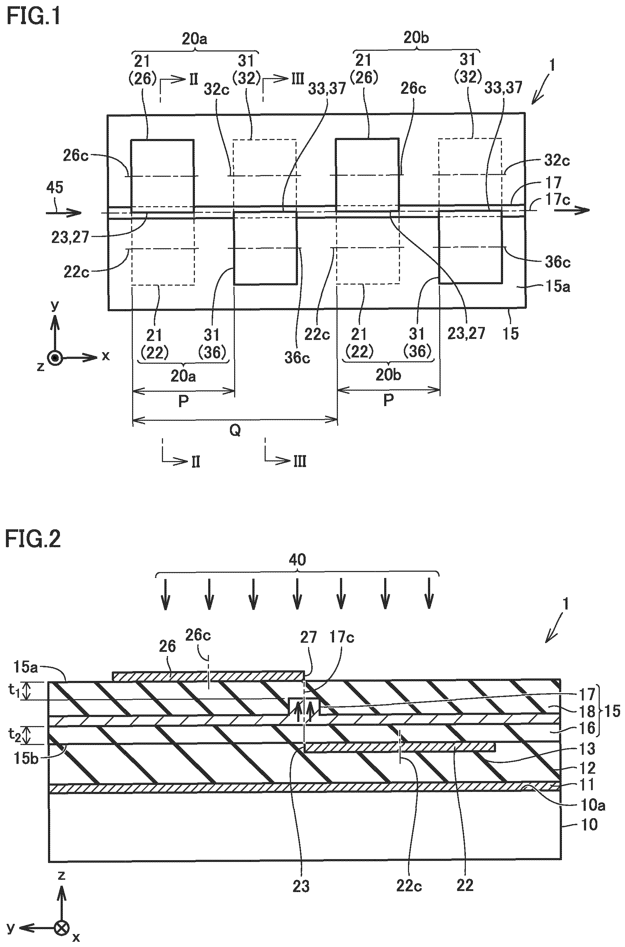

With reference to Figs. 1 to 3, an electro-optic polymer device 1 of the first embodiment will be described. Electro-optic polymer device 1 is, for example, a device that detects an electromagnetic wave 40. Electro-optic polymer device 1 includes a substrate 10, a ground electrode 11, a spacer layer 12, an optical waveguide 15, a first antenna electrode 21, and a second antenna electrode 31.

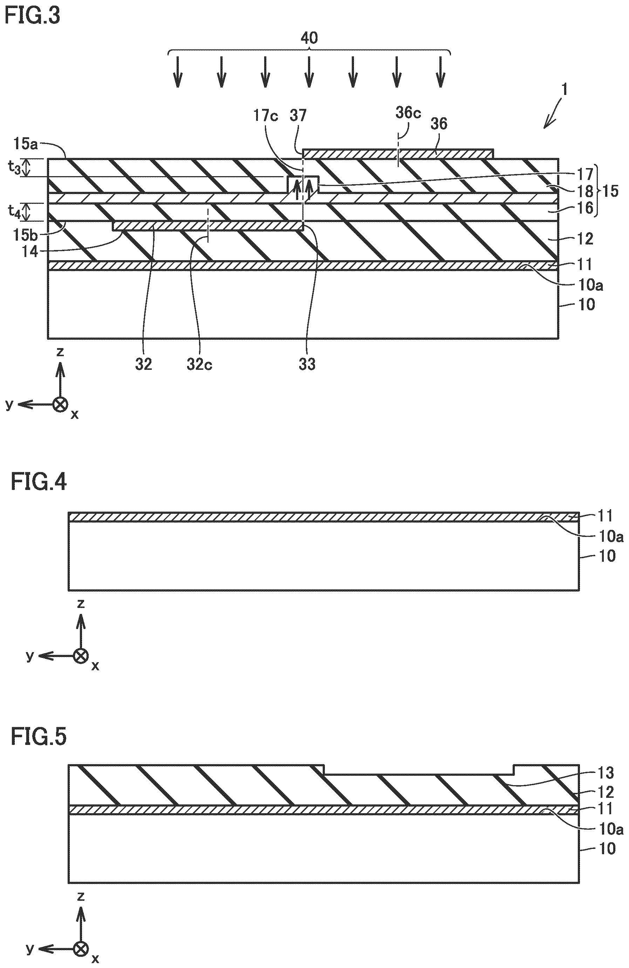

With reference to Figs. 2 and 3, substrate 10 includes a principal surface 10a. Principal surface 10a extends in the x direction and the y direction perpendicular to the x direction. The normal direction of principal surface 10a is the z direction perpendicular to the x direction and the y direction. Substrate 10 is formed of, but is not particularly limited to, for example, a semiconductor material such as silicon (Si). Substrate 10 may be formed of glass such as BK7 or quartz glass, or may be formed of an oxide such as silicon dioxide (SiO₂) or aluminum oxide (Al₂O₃), or may be formed of fluororesin such as polytetrafluoroethylene (PTFE) or CYTOP (registered trademark of AGC Inc.), or may be formed of resin such as polycarbonate, polymethyl methacrylate (PMMA), or cycloolefin polymer (for example, ZEONEX (registered trademark of Zeon Corporation) or ZEONOR (registered trademark of Zeon Corporation)).

Ground electrode 11 is provided on principal surface 10a of substrate 10. Ground electrode 11 is disposed between substrate 10 and spacer layer 12 in the z direction. Ground electrode 11 is disposed opposite to a first upper antenna electrode 26 with respect to first lower antenna electrode 22 at a spacing from a first lower antenna electrode 22 in the z-direction. Ground electrode 11 is disposed opposite to a second upper antenna electrode 36 with respect to second lower antenna electrode 32 at a spacing from a second lower antenna electrode 32 in the z-direction. In plan view of a first principal surface 15a of optical waveguide 15, ground electrode 11 overlaps with first antenna electrode 21 and second antenna electrode 31.

Ground electrode 11 is formed of a conductive material such as gold (Au). Ground electrode 11 may be formed of a metal material such as silver (Ag), copper (Cu), platinum (Pt), aluminum (Al), chromium (Cr), or titanium (Ti), or may be formed of a transparent conductive material such as indium tin oxide (ITO), indium zinc oxide (IZO), or IGZO (InGaZnO). Ground electrode 11 has a thickness of, for example, 200 nm in the normal direction of first principal surface 15a of optical waveguide 15 (z direction). Ground electrode 11 may have a thickness of less than or equal to 10 mm, a thickness of less than or equal to 1 mm, a thickness of less than or equal to 100 µm, a thickness of less than or equal to 10 µm, or a thickness of less than or equal to 1 µm in the normal direction of first principal surface 15a (z direction). To improve the adhesion between ground electrode 11 and spacer layer 12, ground electrode 11 may be covered with, for example, a silicon dioxide (SiO₂) film (not shown).

Spacer layer 12 is provided on ground electrode 11. Spacer layer 12 is disposed between ground electrode 11 and first lower antenna electrode 22, and between ground electrode 11 and second lower antenna electrode 32. Spacer layer 12 is disposed between ground electrode 11 and optical waveguide 15. Spacer layer 12 may have a lower refractive index than a core layer 17. Spacer layer 12 has a thickness of, for example, 40 µm in the normal direction of first principal surface 15a of optical waveguide 15 (z direction). Spacer layer 12 may have a thickness of less than or equal to 10 mm, a thickness of less than or equal to 1 mm, a thickness of less than or equal to 500 µm, a thickness of less than or equal to 100 µm, or a thickness of less than or equal to 10 µm in the normal direction of first principal surface 15a (z direction).

Spacer layer 12 may be formed of the same material as a lower clad layer 16 of optical waveguide 15. Spacer layer 12 is formed of a material having an electrical resistivity greater than 10⁴ Ω·m, for example. Spacer layer 12 may be formed of a material having an electrical resistivity greater than 10⁶ Ω·m, a material having an electrical resistivity greater than 10⁸ Ω·m, a material having an electrical resistivity greater than 10⁹ Ω·m, a material having an electrical resistivity greater than 10¹⁰ Ω·m, or a material having an electrical resistivity greater than 10¹² Ω·m. Therefore, it is possible to reduce the absorption of electromagnetic wave 40 (refer to Figs. 2, 3, and 14) by spacer layer 12.

Spacer layer 12 is formed of, but is not particularly limited to, for example, a resin such as cycloolefin polymer (for example, ZEONEX (registered trademark of Zeon Corporation), ZEONOR (registered trademark of Zeon Corporation), or ARTON (registered trademark of JSR Corporation) and the like), cycloolefin copolymer (TOPAS (registered trademark of Topas Advanced Polymers GmbH) or APEL (registered trademark of Mitsui Chemicals, Inc.) and the like), polyethylene, polystyrene, polycarbonate, or polymethyl methacrylate (PMMA). Spacer layer 12 may be formed of a semiconductor material such as silicon (Si), or may be formed of glass such as BK7 or quartz glass, or may be formed of an oxide such as silicon dioxide (SiO₂) or aluminum oxide (Al₂O₃), or may be formed of a fluororesin such as polytetrafluoroethylene (PTFE) or CYTOP (registered trademark of AGC Inc.).

Optical waveguide 15 has first principal surface 15a and a second principal surface 15b opposite to first principal surface 15a. First principal surface 15a and second principal surface 15b each extend in the x direction and the y direction. The normal directions of first principal surface 15a and second principal surface 15b are both the z direction. First principal surface 15a of optical waveguide 15 is the principal surface of optical waveguide 15 that is proximate to first upper antenna electrode 26. Second principal surface 15b of optical waveguide 15 is the principal surface of optical waveguide 15 that is proximate to first lower antenna electrode 22, second lower antenna electrode 32, ground electrode 11, and substrate 10. Second principal surface 15b of optical waveguide 15 faces first lower antenna electrode 22, second lower antenna electrode 32, ground electrode 11, and principal surface 10a of substrate 10. Optical waveguide 15 includes core layer 17, an upper clad layer 18, and lower clad layer 16.

Core layer 17 has a higher refractive index than lower clad layer 16 and upper clad layer 18. Core layer 17 has a refractive index of, for example, 1.6. Core layer 17 may have a refractive index of less than or equal to 2.5, a refractive index of less than or equal to 2.0, or a refractive index of less than or equal to 1.8. With reference to Fig. 1, the longitudinal direction of core layer 17 is the x direction. The width direction of core layer 17 (±y direction) is perpendicular to the longitudinal direction of core layer 17 (x direction) in the plan view of first principal surface 15a of optical waveguide 15. A center line 17c of core layer 17 is the center line of core layer 17 in the width direction of core layer 17 (± y direction) in the plan view of first principal surface 15a. Center line 17c of core layer 17 extends in the longitudinal direction of core layer 17 (x direction).

Core layer 17 has a width of, for example, 1.6 µm in the width direction of core layer 17 (±y direction). Core layer 17 may have a width of less than or equal to 100 µm, a width of less than or equal to 10 µm, a width of less than or equal to 5 µm, or a width of less than or equal to 2 µm in the width direction of core layer 17 (±y direction). Core layer 17 has a height of, for example, 2 µm in the normal direction of first principal surface 15a of optical waveguide 15 (z direction). Core layer 17 may have a height of less than or equal to 20 µm, a height of less than or equal to 5 µm, a height of less than or equal to 2 µm, or a height of less than or equal to 0.1 µm in the normal direction of first principal surface 15a (z direction). With reference to Figs. 2 and 3, core layer 17 is, for example, a ridge-type core layer.

Core layer 17 is formed of an electro-optic polymer. The electro-optic polymer contains electro-optic molecules. The electro-optic molecules are oriented along the normal direction of first principal surface 15a (z direction) (refer to arrows in core layer 17 in Figs. 2 and 3).

In this specification, the "electro-optic polymer" (hereinafter, may be referred to as "EO polymer") is a polymer that exhibits a second-order non-linear optical effect, and includes (1) a guest-host type electro-optic polymer obtained by mixing a matrix polymer with electro-optic molecules, (2) a side chain type electro-optic polymer containing electro-optic molecules covalently bonded to a side chain of a base polymer, (3) a main chain type electro-optic polymer containing electro-optic molecules covalently bonded in a main chain of a base polymer, (4) a cross-link type electro-optic polymer containing cross-linkage between matrix polymers or base polymers, or between a matrix polymer or a base polymer and electro-optic molecules, and the like, and (5) a molecular glass type electro-optic polymer. The guest-host type electro-optic polymer can also be grasped as a composition containing a matrix polymer and electro-optic molecules.

The "matrix polymer" means a polymer that is a basis for electro-optic polymer. The matrix polymer includes an organic polymer that is a host of the guest-host type electro-optic polymer. The "base polymer" means a polymer that is a basic skeleton of the electro-optic polymer. The base polymer includes an organic polymer of a polymer main chain in a side chain type, main chain type, or cross-link type electro-optic polymer. As the matrix polymer and the base polymer, a transparent polymer without scattering is preferable for use as an optical material. Examples thereof include a (meth)acrylate-based polymer (for example, polymethyl methacrylate (PMMA)), polyamide, polyimide, polycarbonate (for example, poly[Bisphenol A carbonate-co-4,4'-(3,3,5-trimethylcyclo-hexylidene) diphenol carbonate] and the like), polydicyclopentanyl methacrylate (poly DCPMA), polyadamantyl methacrylate (poly AdMA), poly(DCPMA-co-MMA), poly(AdMA-co-MMA) and the like), a cycloolefin polymer, a cycloolefin copolymer, polystyrene, polyethylene, polymethylpentene, polypropylene, polyvinyl alcohol (PVA), polyethylene terephthalate, polysulfone, polyether sulfone, polyester, polyolefin, polyphenylene sulfide, polyurea, a silicon resin, an epoxy resin, and a fluororesin. The organic polymer may be used alone as one type or in combination of multiple types.

The "electro-optic molecules" mean a compound that exhibits a second-order non-linear optical effect. Examples of the electro-optic molecules include compounds that exhibit a second-order non-linear optical effect, described in U.S. Pat. No. 6067186, Japanese National Patent Publication No. 2004-501159, WO 2011/024774 A1, "Organic Materials for Nonlinear Optics" (edited by the Chemical Society of Japan, KIKAN KAGAKU SOSETSU No. 15 (1992), "Organic Nonlinear Optical Materials" (Ch. Bosshard, et. al., Gordonand Breach Publishers (1995)), "Recent Advance on Photonic Organic Materials for Information and Telecommunication Applications", supervised by Toshikuni Kaino, CMC Publishing CO., LTD. (2007), and "Molecular Nonlinear Optics" (ed. J. Zyss, Academic Press (1994)) and the like.

The electro-optic molecules are not particularly limited as long as the electro-optic molecules are the compounds that exhibit a second-order non-linear optical effect, but the electro-optic molecules are preferably compounds having a conjugated chemical structure and further having an electron-donating group and an electron-withdrawing group in their molecules. Here, examples of the conjugated chemical structure include aromatic compounds such as benzene, naphthalene, anthracene, perylene, biphenyl, indene and stilbene, heterocyclic compounds such as furan, pyran, pyrrole, imidazole, pyrazole, thiophene, thiazole, pyridine, pyridazine, pyrimidine, pyrazine, quinoline and coumarin, and compounds in which these compounds are bonded to each other through a carbon-carbon unsaturated bond or a nitrogen-nitrogen unsaturated bond.

Examples of the electron-donating group include an amino group, an alkoxy group, an allyloxy group, and a thioether group that may be substituted with an alkyl group, an aryl group, or an acyl group. Examples of the electron-withdrawing group include a nitro group, a cyano group, a dicyanovinyl group, a tricyanovinyl group, a halogen atom, a carbonyl group, a sulfone group, perfluoroalkyl, and tricyanovinylfuran, and tricyanofuran.

Examples of the electro-optic molecules include those represented by the following structural formulae [A-1] to [A-7]. These can be used alone as one type or in combination of a number of types greater than or equal to two.

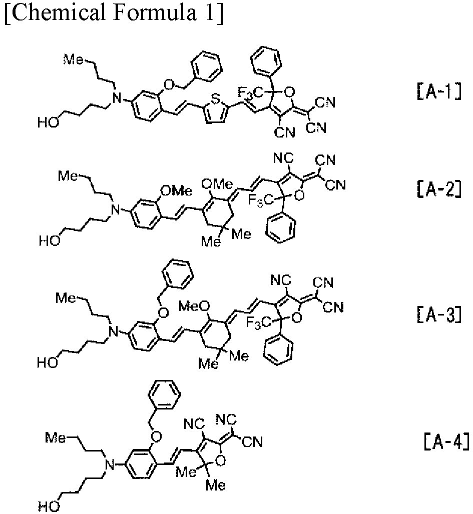

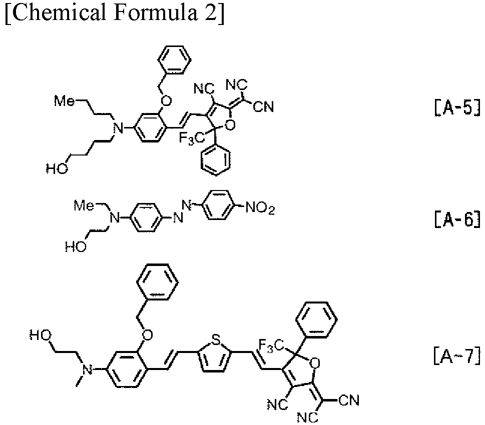

The content ratio of the electro-optic molecules is not particularly limited, but it is usually about 1 to 70% by mass with respect to the total amount of the matrix polymer or the base polymer and the electro-optic molecules (corresponding to the total mass of the electro-optic polymer), preferably about 5 to 60% by mass, and more preferably about 10 to 50% by mass. The content ratio is the same even when the electro-optic polymer is in a side chain type or main chain type form. Here, in the case of the side chain type electro-optic polymer, the content ratio of the electro-optic molecules is determined based on the electro-optic molecules derived from a side chain moiety. In the case of the main chain type electro-optic polymer, the content ratio of an electro-optic dye is determined based on an electro-optic molecular moiety in the main chain.

The electro-optic polymer may be, for example, a side chain type electro-optic polymer having repeating units represented by the formulae (1) to (3). In the formula, p, q, and r each represent a positive integer. Here, the side chain type electro-optic polymer may be a copolymer of a repeating unit (for example, a repeating unit represented by the formula (1) or the formula (3)) constituting a base polymer not containing an electro-optic molecular moiety as a side chain with a repeating unit (for example, a repeating unit represented by the formula (2)) constituting a base polymer containing an electro-optic molecular moiety as a side chain. In this case, the copolymer may be a random copolymer, a block copolymer, or a graft copolymer.

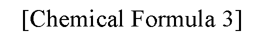

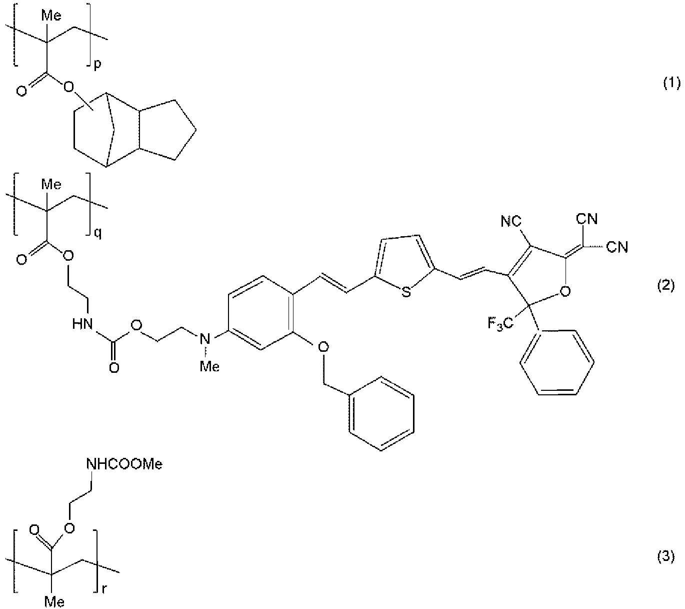

With reference to Figs. 2 and 3, lower clad layer 16 is disposed between first lower antenna electrode 22 and core layer 17 in the normal direction of first principal surface 15a (z direction). Lower clad layer 16 is disposed between second lower antenna electrode 32 and core layer 17 in the normal direction of first principal surface 15a (z direction). Lower clad layer 16 is disposed between spacer layer 12 and core layer 17 in the normal direction of first principal surface 15a (z direction). Lower clad layer 16 has a lower refractive index than core layer 17. When optical waveguide 15 includes lower clad layer 16, second principal surface 15b of optical waveguide 15 is formed of lower clad layer 16. Lower clad layer 16 reduces the absorption of light 45 propagating through core layer 17 by first lower antenna electrode 22 and second lower antenna electrode 32.

Lower clad layer 16 is formed of a material having an electrical resistivity greater than 10⁴ Ω·m, for example. Lower clad layer 16 may be formed of a material having an electrical resistivity greater than 10⁶ Ω·m, a material having an electrical resistivity greater than 10⁸ Ω·m, a material having an electrical resistivity greater than 10⁹ Ω·m, a material having an electrical resistivity greater than 10¹⁰ Q m, or a material having an electrical resistivity greater than 10¹² Ω·m. Therefore, it is possible to reduce the absorption of electromagnetic wave 40 (refer to Figs. 2, 3, and 14) by lower clad layer 16.

Lower clad layer 16 is formed of, but is not particularly limited to, for example, a resin such as cycloolefin polymer (for example, ZEONEX (registered trademark of Zeon Corporation), ZEONOR (registered trademark of Zeon Corporation), or ARTON (registered trademark of JSR Corporation) and the like), cycloolefin copolymer (TOPAS (registered trademark of Topas Advanced Polymers GmbH) or APEL (registered trademark of Mitsui Chemicals, Inc.) and the like), polyethylene, polystyrene, polycarbonate, or polymethyl methacrylate (PMMA). Lower clad layer 16 may be formed of a semiconductor material such as silicon (Si), or may be formed of glass such as BK7 or quartz glass, or may be formed of an oxide such as silicon dioxide (SiO₂) or aluminum oxide (Al₂O₃), or may be formed of a fluororesin such as polytetrafluoroethylene (PTFE) or CYTOP (registered trademark of AGC Inc.).

Upper clad layer 18 is disposed between first upper antenna electrode 26 and core layer 17 in the normal direction of first principal surface 15a (z direction). Upper clad layer 18 is disposed between second upper antenna electrode 36 and core layer 17 in the normal direction of first principal surface 15a (z direction). Upper clad layer 18 has a lower refractive index than core layer 17. When optical waveguide 15 includes upper clad layer 18, at least a portion of first principal surface 15a of optical waveguide 15 is formed of upper clad layer 18. Upper clad layer 18 reduces the absorption of light 45 propagating through core layer 17 by first upper antenna electrode 26 and second upper antenna electrode 36.

Upper clad layer 18 is formed of a material having an electrical resistivity greater than 10⁴ Ω·m, for example. Upper clad layer 18 may be formed of a material having an electrical resistivity greater than 10⁶ Ω·m, a material having an electrical resistivity greater than 10⁸ Ω·m, a material having an electrical resistivity greater than 10⁹ Ω·m, a material having an electrical resistivity greater than 10¹⁰ Ω·m, or a material having an electrical resistivity greater than 10¹² Q m. Therefore, it is possible to reduce the absorption of electromagnetic wave 40 (refer to Figs. 2, 3, and 14) by upper clad layer 18.

Upper clad layer 18 may be formed of the same material as lower clad layer 16, or may be formed of a different material from lower clad layer 16. Upper clad layer 18 is formed, but is not particularly limited to, for example, by UV-cured resin (for example, FE4048, manufactured by NTT Advanced Technology Corporation). Upper clad layer 18 may be formed of, for example, resin such as cycloolefin polymer (for example, ZEONEX (registered trademark of Zeon Corporation), ZEONOR (registered trademark of Zeon Corporation), or ARTON (registered trademark of JSR Corporation) and the like), cycloolefin copolymer (TOPAS (registered trademark of Topas Advanced Polymers GmbH) or APEL (registered trademark of Mitsui Chemicals, Inc.) and the like), polyethylene, polystyrene, polycarbonate, or polymethyl methacrylate (PMMA), or may be formed of semiconductor materials such as silicon (Si), may be formed of glass such as BK7 or quartz glass, or may be formed of an oxide such as silicon dioxide (SiO₂) or aluminum oxide (Al₂O₃), or may be formed of fluororesin such as polytetrafluoroethylene (PTFE) or CYTOP (registered trademark of AGC Inc.).

First antenna electrode 21 is formed of a conductive material such as gold (Au). First antenna electrode 21 may be formed of a metal material such as silver (Ag), copper (Cu), platinum (Pt), aluminum (Al), chromium (Cr), or titanium (Ti), or a transparent conductive material such as ITO, IZO, or IGZO. With reference to Figs. 1 to 3, first antenna electrode 21 includes first upper antenna electrode 26 and first lower antenna electrode 22.

First upper antenna electrode 26 is provided on first principal surface 15a of optical waveguide 15. First upper antenna electrode 26 has a thickness of, for example, 200 nm in the normal direction of first principal surface 15a (z direction). First upper antenna electrode 26 may have a thickness of less than or equal to 100 µm, a thickness of less than or equal to 10 µm, or a thickness of less than or equal to 1 µm in the normal direction of first principal surface 15a (z direction). A first distance ti between first upper antenna electrode 26 and core layer 17 in the normal direction of first principal surface 15a (z direction) is, for example, less than or equal to 20 µm. First distance ti may be less than or equal to 10 µm, or may be less than or equal to 5 µm.

First upper antenna electrode 26 includes a first edge 27 proximate to center line 17c of core layer 17 in the plan view of first principal surface 15a. First edge 27 extends along the longitudinal direction of core layer 17 (x direction). In the plan view of first principal surface 15a, a first center line 26c of first upper antenna electrode 26 in the width direction of core layer 17 (±y direction) is shifted in the first width direction (+y direction) with respect to center line 17c of core layer 17. The first width direction is one side of the width direction of core layer 17 (±y direction). In the plan view of first principal surface 15a, first edge 27 overlaps with core layer 17. More specifically, in the plan view of first principal surface 15a, first edge 27 coincides with center line 17c of core layer 17.

A portion of first upper antenna electrode 26 that is far from center line 17c of core layer 17 in the width direction of core layer 17 (±y direction) mainly functions as an antenna that receives electromagnetic wave 40 (refer to Figs. 2, 3, and 14). A portion of first upper antenna electrode 26 that is close to center line 17c of core layer 17 in the width direction of core layer 17 (±y direction) mainly functions as a modulation electrode that applies an electric field based on electromagnetic wave 40 received by the antenna to core layer 17. In this specification, the "electromagnetic wave" means an electromagnetic wave having a frequency greater than or equal to 0.2 GHz and less than or equal to 100 THz, including terahertz waves, microwaves, millimeter waves, infrared light, and the like. First upper antenna electrode 26 includes a rectangular antenna. That is, in the plan view of first principal surface 15a, the portion of first upper antenna electrode 26 that functions as an antenna has a rectangular shape. The shape of first upper antenna electrode 26 is not particularly limited.

First lower antenna electrode 22 is provided on spacer layer 12. First lower antenna electrode 22 is provided, for example, within a recess portion 13 formed in spacer layer 12 (refer to Fig. 2). First lower antenna electrode 22 is provided on second principal surface 15b of optical waveguide 15. First lower antenna electrode 22 has, for example, a thickness of 200 nm in the normal direction of first principal surface 15a (z direction). First lower antenna electrode 22 may have a thickness less than or equal to 100 µm, a thickness less than or equal to 10 µm, or a thickness less than or equal to 1 µm in the normal direction of first principal surface 15a (z direction). A second distance t₂ between first lower antenna electrode 22 and core layer 17 in the normal direction of first principal surface 15a (z direction) is, for example, less than or equal to 20 µm. Second distance t₂ may be less than or equal to 10 µm, or may be less than or equal to 5 µm.

First lower antenna electrode 22 includes a second edge 23 proximate to center line 17c of core layer 17 in the plan view of first principal surface 15a. Second edge 23 extends along the longitudinal direction of core layer 17 (x direction). In the plan view of first principal surface 15a, a second center line 22c of first lower antenna electrode 22 in the width direction of core layer 17 (±y direction) is shifted in the second width direction (-y direction) with respect to center line 17c of core layer 17. The second width direction is opposite to the first width direction (+y direction) and is the other side of the width direction of core layer 17 (±y direction). In the plan view of first principal surface 15a, first lower antenna electrode 22 is symmetrically disposed to first upper antenna electrode 26 with respect to center line 17c of core layer 17. In the plan view of first principal surface 15a, second edge 23 overlaps with core layer 17. More specifically, in the plan view of first principal surface 15a, second edge 23 coincides with center line 17c of core layer 17.

A portion of first lower antenna electrode 22 that is far from center line 17c of core layer 17 in the width direction of core layer 17 (±y direction) mainly functions as an antenna that receives electromagnetic wave 40. A portion of first lower antenna electrode 22 that is close to center line 17c of core layer 17 in the width direction of core layer 17 (±y direction) mainly functions as a modulation electrode that applies an electric field based on electromagnetic wave 40 received by the antenna to core layer 17. First lower antenna electrode 22 includes a rectangular antenna. That is, in the plan view of first principal surface 15a, a portion of first lower antenna electrode 22 that functions as an antenna has a rectangular shape. The shape of first lower antenna electrode 22 is not particularly limited. In the plan view of first principal surface 15a, at least a portion of first lower antenna electrode 22 is exposed from first upper antenna electrode 26. Specifically, in the plan view of first principal surface 15a, at least a portion of first lower antenna electrode 22 functioning as an antenna is exposed from first upper antenna electrode 26.

Second antenna electrode 31 is formed of a conductive material such as gold (Au). Second antenna electrode 31 may be formed of a metal material such as silver (Ag), copper (Cu), platinum (Pt), aluminum (Al), chromium (Cr), or titanium (Ti), or a transparent conductive material such as ITO, IZO, or IGZO. With reference to Fig. 1, second antenna electrode 31 is disposed at a spacing from first antenna electrode 21 in the longitudinal direction of core layer 17 (x direction). With reference to Figs. 1 to 3, second antenna electrode 31 includes second upper antenna electrode 36 and second lower antenna electrode 32.

Second upper antenna electrode 36 is provided on first principal surface 15a of optical waveguide 15. Second upper antenna electrode 36 has a thickness of, for example, 200 nm in the normal direction of first principal surface 15a (z direction). Second upper antenna electrode 36 may have a thickness of less than or equal to 100 µm, a thickness of less than or equal to 10 µm, or a thickness of less than or equal to 1 µm in the normal direction of first principal surface 15a (z direction). A third distance t₃ between second upper antenna electrode 36 and core layer 17 in the normal direction of first principal surface 15a (z direction) is, for example, less than or equal to 20 µm. Third distance t₃ may be less than or equal to 10 µm, or may be less than or equal to 5 µm.

Second upper antenna electrode 36 includes a third edge 37 proximate to center line 17c of core layer 17 in the plan view of first principal surface 15a. Third edge 37 extends along the longitudinal direction of core layer 17 (x direction). In the plan view of first principal surface 15a, a third center line 36c of second upper antenna electrode 36 in the width direction of core layer 17 (±y direction) is shifted in the second width direction (-y direction) with respect to center line 17c of core layer 17. In the plan view of first principal surface 15a, third edge 37 overlaps with core layer 17. More specifically, in the plan view of first principal surface 15a, third edge 37 coincides with center line 17c of core layer 17.

A portion of second upper antenna electrode 36 that is far from center line 17c of core layer 17 in the width direction of core layer 17 (±y direction) mainly functions as an antenna that receives electromagnetic wave 40. A portion of second upper antenna electrode 36 that is close to center line 17c of core layer 17 in the width direction of core layer 17 (±y direction) mainly functions as a modulation electrode that applies an electric field based on electromagnetic wave 40 received by the antenna to core layer 17. Second upper antenna electrode 36 includes a rectangular antenna. That is, in the plan view of first principal surface 15a, a portion of second upper antenna electrode 36 that functions as an antenna has a rectangular shape. The shape of second upper antenna electrode 36 is not particularly limited.

Second lower antenna electrode 32 is provided on spacer layer 12. Second lower antenna electrode 32 is provided, for example, within a recess portion 14 formed in spacer layer 12 (refer to Fig. 3). Second lower antenna electrode 32 is provided on second principal surface 15b of optical waveguide 15. Second lower antenna electrode 32 has a thickness of, for example, 200 nm in the normal direction of first principal surface 15a (z direction). Second lower antenna electrode 32 may have a thickness less than or equal to 100 µm, a thickness less than or equal to 10 µm, or a thickness less than or equal to 1 µm in the normal direction of first principal surface 15a (z direction). A fourth distance t₄ between second lower antenna electrode 32 and core layer 17 in the normal direction of first principal surface 15a (z direction) is, for example, less than or equal to 20 µm. Fourth distance t₄ may be less than or equal to 10 µm, or may be less than or equal to 5 µm.

Second lower antenna electrode 32 includes a fourth edge 33 proximate to center line 17c of core layer 17 in the plan view of first principal surface 15a. Fourth edge 33 extends along the longitudinal direction of core layer 17 (x direction). In the plan view of first principal surface 15a, a fourth center line 32c of second lower antenna electrode 32 in the width direction of core layer 17 (±y direction) is shifted in the first width direction (+y direction) with respect to center line 17c of core layer 17. In the plan view of first principal surface 15a, second lower antenna electrode 32 is symmetrically disposed to second upper antenna electrode 36 with respect to center line 17c of core layer 17. In the plan view of first principal surface 15a, fourth edge 33 overlaps with core layer 17. More specifically, in the plan view of first principal surface 15a, fourth edge 33 coincides with center line 17c of core layer 17.

A portion of second lower antenna electrode 32 that is far from center line 17c of core layer 17 in the width direction of core layer 17 (±y direction) mainly functions as an antenna that receives electromagnetic wave 40. A portion of second lower antenna electrode 32 that is close to center line 17c of core layer 17 in the width direction of core layer 17 (±y direction) mainly functions as a modulation electrode that applies an electric field based on electromagnetic wave 40 received by the antenna to core layer 17. Second lower antenna electrode 32 includes a rectangular antenna. That is, in the plan view of first principal surface 15a, a portion of second lower antenna electrode 32 that functions as an antenna has a rectangular shape. The shape of second lower antenna electrode 32 is not particularly limited. In the plan view of first principal surface 15a, at least a portion of second lower antenna electrode 32 is exposed from second upper antenna electrode 36. Specifically, in the plan view of first principal surface 15a, at least a portion of second lower antenna electrode 32 that functions as an antenna is exposed from second upper antenna electrode 36.

An arrangement pitch P of first antenna electrode 21 and second antenna electrode 31 in the longitudinal direction of core layer 17 (x direction) is appropriately determined based on the wavelength of electromagnetic wave 40 received by first antenna electrode 21 and second antenna electrode 31 and the refractive index of core layer 17 for the light propagating through core layer 17. Arrangement pitch P is, for example, greater than or equal to 0.5 µm and less than or equal to 50 mm.

In electro-optic polymer device 1, a plurality of antenna electrode pairs 20a and 20b are periodically arranged along the longitudinal direction of core layer 17 (x direction). Each of the plurality of antenna electrode pairs 20a and 20b includes first antenna electrode 21 and second antenna electrode 31. An arrangement period Q of the plurality of antenna electrode pairs 20a and 20b in the longitudinal direction of core layer 17 (x direction) is appropriately determined based on the wavelength of electromagnetic wave 40 received by the plurality of antenna electrode pairs 20a and 20b and the refractive index of core layer 17 for the light propagating through core layer 17. Arrangement period Q is, for example, greater than or equal to 1 µm and less than or equal to 100 mm. Arrangement period Q of the plurality of antenna electrode pairs 20a and 20b is, for example, twice arrangement pitch P of first antenna electrode 21 and second antenna electrode 31.

With reference to Figs. 1, 2, and 4 to 13, one example of the method for producing electro-optic polymer device 1 of the present embodiment will be described.

With reference to Fig. 4, ground electrode 11 is formed on principal surface 10a of substrate 10 by sputtering or the like. To improve the adhesion between ground electrode 11 and spacer layer 12, ground electrode 11 may be covered with, for example, a silicon dioxide film (not shown). With reference to Fig. 5, pretreatment is applied to ground electrode 11 and spacer layer 12 to improve the adhesion between ground electrode 11 and spacer layer 12. For example, oxygen plasma treatment is applied to the surfaces of ground electrode 11 and spacer layer 12 by using a reactive ion etching (RIE) device or the like. While heating spacer layer 12 and substrate 10 at a temperature lower than the glass transition temperature of spacer layer 12 (for example, 100°C), spacer layer 12 is pressed onto substrate 10. In this way, spacer layer 12 is formed on ground electrode 11. Spacer layer 12 may be formed by spin coating or the like. A resist pattern (not shown) or the like is formed on spacer layer 12 by photolithography or the like. The resist pattern is used to remove a portion of spacer layer 12 by reactive ion etching or the like, and recess portions 13 and 14 (not shown) are formed.

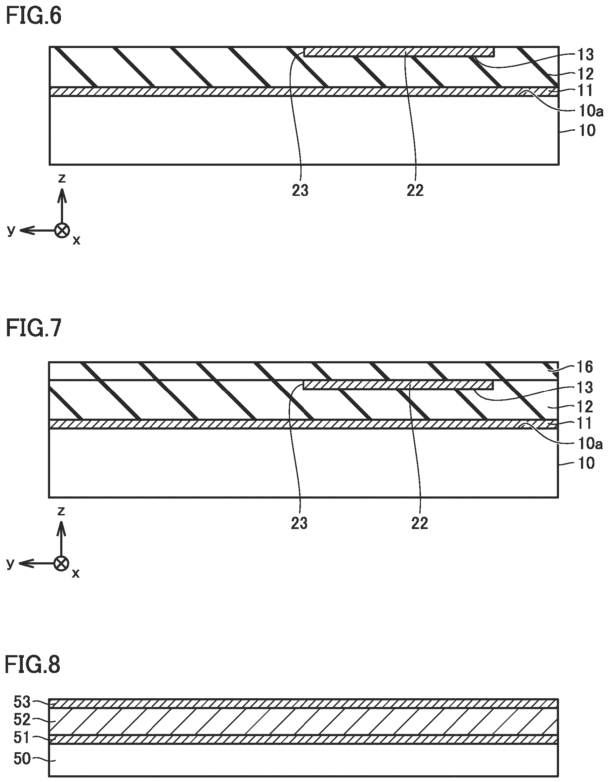

With reference to Fig. 6, first lower antenna electrode 22 and second lower antenna electrode 32 (not shown) are formed on spacer layer 12 by sputtering or the like. Specifically, first lower antenna electrode 22 is formed within recess portion 13. Second lower antenna electrode 32 is formed within recess portion 14 (not shown).

With reference to Fig. 7, to improve the adhesion between first lower antenna electrode 22 and lower clad layer 16, the adhesion between second lower antenna electrode 32 and lower clad layer 16, and the adhesion between spacer layer 12 and lower clad layer 16, pretreatment is applied to first lower antenna electrode 22, second lower antenna electrode 32, spacer layer 12, and lower clad layer 16. For example, oxygen plasma treatment is applied to the surface of first lower antenna electrode 22, the surface of second lower antenna electrode 32, the surface of spacer layer 12, and the surface of lower clad layer 16 by using a reactive ion etching (RIE) device or the like. While heating lower clad layer 16 and substrate 10 at a temperature lower than the glass transition temperature of spacer layer 12 and the glass transition temperature of lower clad layer 16 (for example, 100°C), lower clad layer 16 is pressed onto substrate 10. In this way, lower clad layer 16 is formed on first lower antenna electrode 22, second lower antenna electrode 32, and spacer layer 12. Lower clad layer 16 may be formed by spin coating or the like.

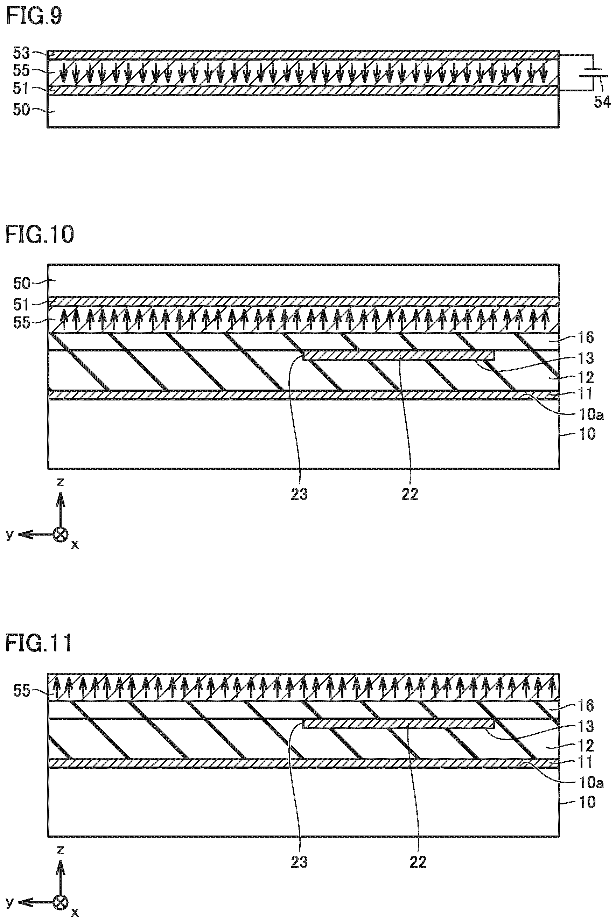

With reference to Figs. 8 and 9, the method for preparing an electro-optic polymer layer 55 in which electro-optic molecules are oriented will be described.

With reference to Fig. 8, a lower electrode 51 is formed on a support body 50 by sputtering or the like. Support body 50 is formed of a material including, but is not particularly limited to, for example, a semiconductor material such as silicon (Si), or a material including glass such as BK7 or quartz glass. Lower electrode 51 is formed of, for example, a conductive material such as IZO. An electro-optic polymer is applied onto lower electrode 51 by spin coating or the like. The electro-optic polymer is subjected to thermal annealing. In this way, an electro-optic polymer layer 52 is formed. Electro-optic polymer layer 52 is formed of the electro-optic polymer containing electro-optic molecules. The electro-optic molecules are not yet oriented. An upper electrode 53 is formed on electro-optic polymer layer 52 by sputtering or the like. Upper electrode 53 is formed of, for example, a conductive material such as IZO.

With reference to Fig. 9, lower electrode 51 and upper electrode 53 are connected to a power supply 54. The poling process is performed on electro-optic polymer layer 52. Specifically, while heating up to the temperature near the glass transition temperature of electro-optic polymer layer 52 (for example, 150°C), a voltage (for example, electric field strength of 100 V/µm) is applied between lower electrode 51 and upper electrode 53. By this poling process, the electro-optic molecules contained in electro-optic polymer layer 52 are oriented along the direction in which upper electrode 53 and lower electrode 51 are separated from each other (normal direction of first principal surface 15a (z direction)). In this way, electro-optic polymer layer 55 with oriented electro-optic molecules is obtained.

With reference to Fig. 10, upper electrode 53 is removed by wet etching or the like. Then, to increase the bonding strength between electro-optic polymer layer 55 and lower clad layer 16, pretreatment is applied to electro-optic polymer layer 55 and lower clad layer 16. For example, oxygen plasma treatment is applied to the surface of electro-optic polymer layer 55 from which upper electrode 53 has been removed by using a reactive ion etching (RIE) device or the like. Oxygen plasma treatment is applied to the surface of lower clad layer 16 by using the reactive ion etching (RIE) device or the like, and then surface treatment is applied using a silane coupling agent with amino groups. While heating support body 50 and substrate 10 at a temperature lower than the glass transition temperature of electro-optic polymer layer 55 (for example, 100°C), support body 50 and substrate 10 are pressed together. With reference to Fig. 11, support body 50 and lower electrode 51 are removed from electro-optic polymer layer 55. In this way, electro-optic polymer layer 55 in which the electro-optic molecules are oriented is transferred onto lower clad layer 16.

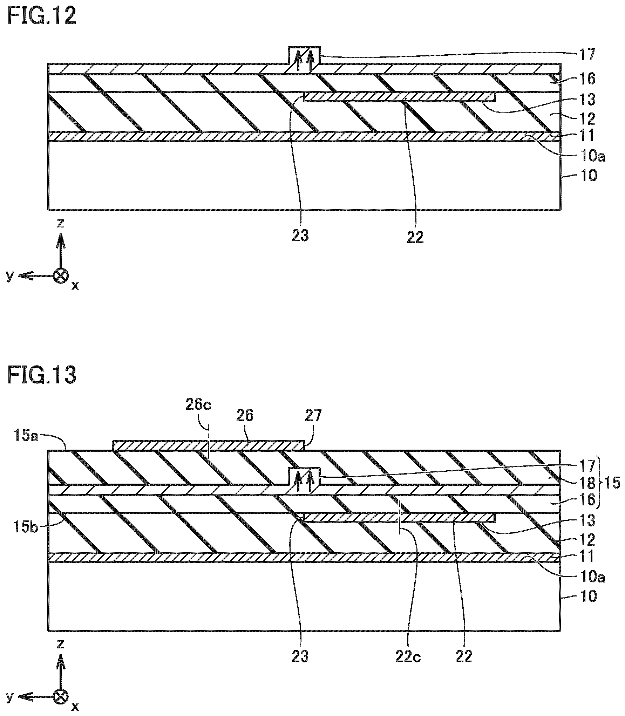

With reference to Fig. 12, a resist pattern (not shown) is formed on electro-optic polymer layer 55 by photolithography or the like. The resist pattern or the like is used to process electro-optic polymer layer 55 in which the electro-optic molecules are oriented by dry etching or the like, forming core layer 17. With reference to Fig. 13, a UV-curable resin is applied onto core layer 17 by spin coating or the like. The UV-curable resin is cured by irradiating the UV-cured resin with ultraviolet rays. In this way, upper clad layer 18 is formed. A resist pattern (not shown) or the like is formed on upper clad layer 18 by photolithography or the like. First upper antenna electrode 26 and second upper antenna electrode 36 (not shown) are formed by sputtering or the like. In this way, electro-optic polymer device 1 shown in Figs. 1 to 3 is obtained.

In one example of the method for producing electro-optic polymer device 1 of the present embodiment, the poling process is performed on electro-optic polymer layer 55 by using upper electrode 53 and lower electrode 51, which are separate from first antenna electrode 21 and second antenna electrode 31. Therefore, it is possible to set the electrical resistivity of each of lower clad layer 16 and upper clad layer 18 higher than the electrical resistivity of core layer 17 (electro-optic polymer layer 55). For example, while the electrical resistivity of core layer 17 (electro-optic polymer layer 55) is greater than or equal to 10⁶ Ω·m and less than or equal to 10⁸ Ω·m, the electrical resistivity of each of lower clad layer 16 and upper clad layer 18 is greater than 10⁸ Ω·m. Generally, as the electrical resistivity of a layer increases, the absorption of electromagnetic waves in the layer decreases. Therefore, it is possible to reduce the absorption of electromagnetic wave 40 by lower clad layer 16 and upper clad layer 18.

In contrast, in the method for producing the electro-optic polymer device of the comparative example, at least one of upper clad layer 18 or lower clad layer 16 is disposed between one pair of poling electrodes, in addition to electro-optic polymer layer 55. The poling process of electro-optic polymer layer 55 applies a poling electric field to at least one of upper clad layer 18 or lower clad layer 16, in addition to core layer 17. Therefore, if at least one of upper clad layer 18 or lower clad layer 16 has a higher electrical resistivity than electro-optic polymer layer 55, the poling voltage is not applied to electro-optic polymer layer 55 efficiently. Therefore, it is not possible to sufficiently orient the electro-optic molecules in electro-optic polymer layer 55. The performance of the electro-optic polymer device produced by the production method of the comparative example is lower than the performance of electro-optic polymer device 1 produced by the production method of the present embodiment.

With reference to Figs. 1 to 3 and 14, the operation and effect of electro-optic polymer device 1 of the present embodiment will be described.

Light 45 enters core layer 17. Light 45 propagates through core layer 17. Light 45 is, for example, but is not particularly limited to, laser light having a wavelength of, for example, near-infrared (for example, 1.535 µm). Electromagnetic wave 40 enters electro-optic polymer device 1. Electromagnetic wave 40 contains electric field components along the width direction of core layer 17 (±y direction).

First antenna electrode 21 (first upper antenna electrode 26 and first lower antenna electrode 22) receives electromagnetic wave 40. In the present embodiment, in the plan view of first principal surface 15a, second center line 22c of first lower antenna electrode 22 is shifted in the opposite direction from first center line 26c of first upper antenna electrode 26 with respect to center line 17c of core layer 17. Electromagnetic wave 40 can reach first lower antenna electrode 22 without being blocked by first upper antenna electrode 26. Therefore, first antenna electrode 21 can efficiently receive the electric field component along the width direction of core layer 17 (±y direction) out of electromagnetic wave 40.

First antenna electrode 21 (first upper antenna electrode 26 and first lower antenna electrode 22) applies the electric field based on electromagnetic wave 40 received by first antenna electrode 21 to core layer 17. This electric field is concentrated on the portion of first edge 27 of first upper antenna electrode 26 that contacts optical waveguide 15 (corner of first upper antenna electrode 26) and the portion of second edge 23 of first lower antenna electrode 22 that contacts optical waveguide 15 (corner of first lower antenna electrode 22). In the present embodiment, in the plan view of first principal surface 15a, first edge 27 of first upper antenna electrode 26 and second edge 23 of first lower antenna electrode 22 overlap with core layer 17. Therefore, core layer 17 is positioned on a straight line connecting the portion of first edge 27 of first upper antenna electrode 26 that contacts optical waveguide 15 (corner of first upper antenna electrode 26) and the portion of second edge 23 of first lower antenna electrode 22 that contacts optical waveguide 15 (corner of first lower antenna electrode 22). The direction of the electric field applied to core layer 17 by first upper antenna electrode 26 and first lower antenna electrode 22 becomes more parallel to the orientation direction of the electro-optic molecules (normal direction of first principal surface 15a (z direction)). The component of the electric field applied from first antenna electrode 21 to core layer 17 along the orientation direction of the electro-optic molecules (z direction) can be increased.

In this way, light 45 propagating through core layer 17 is efficiently modulated by the electric field based on electromagnetic wave 40 received by first antenna electrode 21. The optical modulation efficiency of electro-optic polymer device 1 is improved.

Second antenna electrode 31 (second upper antenna electrode 36 and second lower antenna electrode 32) also receives electromagnetic wave 40, in a similar manner to first antenna electrode 21 (first upper antenna electrode 26 and first lower antenna electrode 22). Light 45 propagating through core layer 17 is efficiently modulated by the electric field based on electromagnetic wave 40 received by first antenna electrode 21 and second antenna electrode 31. The optical modulation efficiency of electro-optic polymer device 1 is improved.

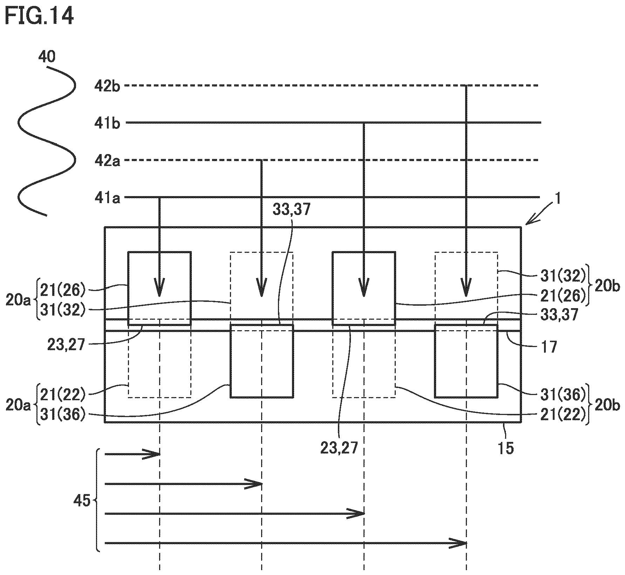

For example, as shown in Fig. 14, when light 45 propagating through core layer 17 reaches first antenna electrode 21, a peak 41a of electromagnetic wave 40 reaches first antenna electrode 21. When light 45 propagating through core layer 17 reaches second antenna electrode 31, a trough 42a of electromagnetic wave 40 reaches second antenna electrode 31. In this way, light 45 propagating through core layer 17 is modulated by the electric field based on peak 41a of electromagnetic wave 40 and the electric field based on trough 42a of electromagnetic wave 40 in first antenna electrode 21 and second antenna electrode 31.

Furthermore, in electro-optic polymer device 1, the plurality of antenna electrode pairs 20a and 20b are periodically arranged along the longitudinal direction of core layer 17 (x direction). Each of the plurality of antenna electrode pairs 20a and 20b includes first antenna electrode 21 and second antenna electrode 31. Light 45 propagating through core layer 17 is efficiently modulated by the electric field based on electromagnetic wave 40 received by the plurality of antenna electrode pairs 20a and 20b. The optical modulation efficiency of electro-optic polymer device 1 is improved.

For example, as shown in Fig. 14, when light 45 propagating through core layer 17 reaches first antenna electrode 21 of antenna electrode pair 20a, peak 41a of electromagnetic wave 40 reaches first antenna electrode 21 of antenna electrode pair 20a. When light 45 propagating through core layer 17 reaches second antenna electrode 31 of antenna electrode pair 20a, trough 42a of electromagnetic wave 40 reaches second antenna electrode 31 of antenna electrode pair 20a. When light 45 propagating through core layer 17 reaches first antenna electrode 21 of antenna electrode pair 20b, a peak 41b of electromagnetic wave 40 reaches first antenna electrode 21 of antenna electrode pair 20b. When light 45 propagating through core layer 17 reaches second antenna electrode 31 of antenna electrode pair 20b, a trough 42b of electromagnetic wave 40 reaches second antenna electrode 31 of antenna electrode pair 20b. In this way, light 45 propagating through core layer 17 is repeatedly modulated by the electric field based on peaks 41a and 41b of electromagnetic wave 40 and the electric field based on troughs 42a and 42b of electromagnetic wave 40 in first antenna electrode 21 and second antenna electrode 31 of the plurality of antenna electrode pairs 20a and 20b.

### (Variant)

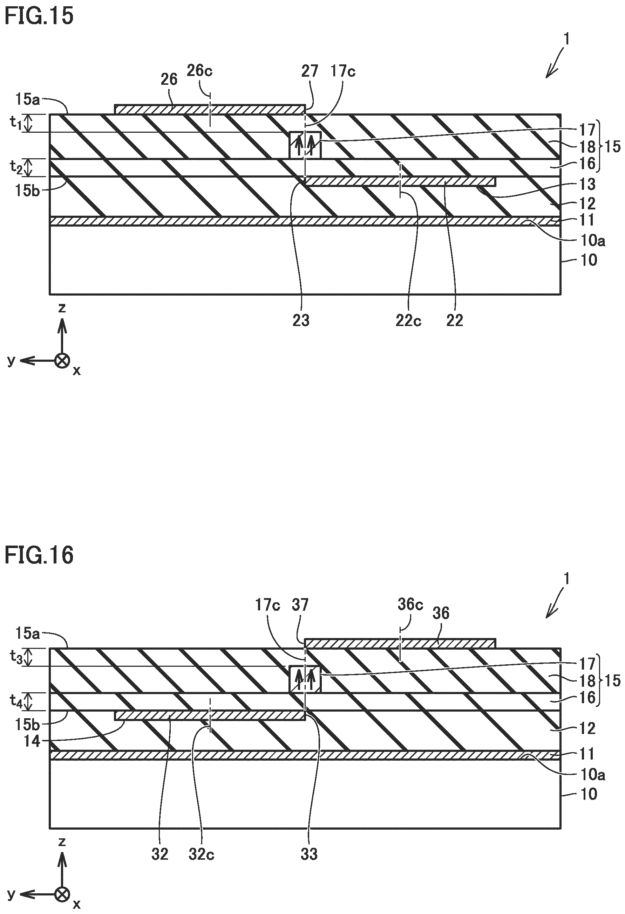

Core layer 17 may be a channel-type core layer or a rib-type core layer, as shown in Figs. 15 and 16. Core layer 17 may be a photobleaching-type core layer produced by photobleaching electro-optic molecules in a portion longer than or equal to a certain distance away from center line 17c of core layer 17 in the width direction of core layer 17 (±y direction) to reduce the refractive index of that portion.

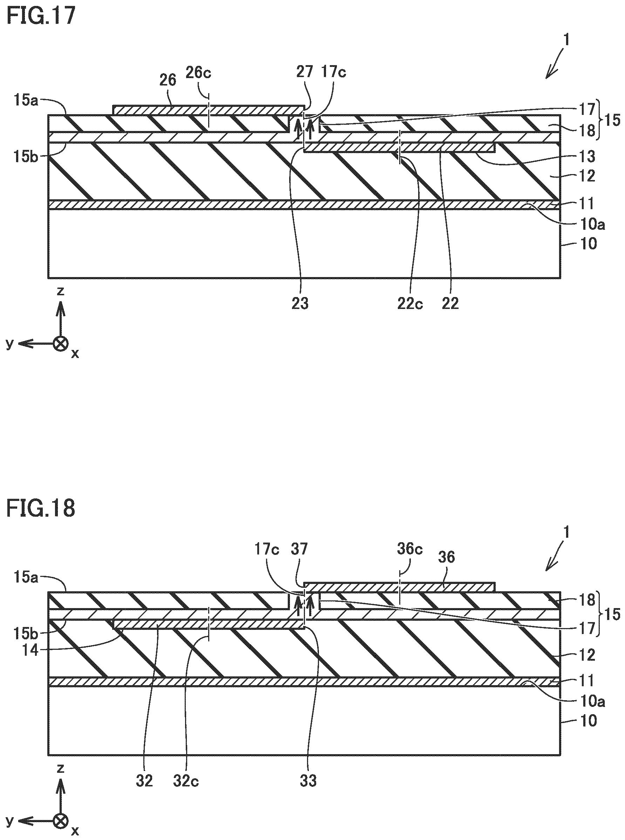

As shown in Figs. 17 and 18, first upper antenna electrode 26, first lower antenna electrode 22, second upper antenna electrode 36 (not shown), and second lower antenna electrode 32 (not shown) may contact core layer 17. That is, lower clad layer 16 may be omitted, and upper clad layer 18 may not be provided on core layer 17. Therefore, the component of the electric field applied from first antenna electrode 21 and second antenna electrode 31 to core layer 17 along the orientation direction of the electro-optic molecules (z direction) can be increased.

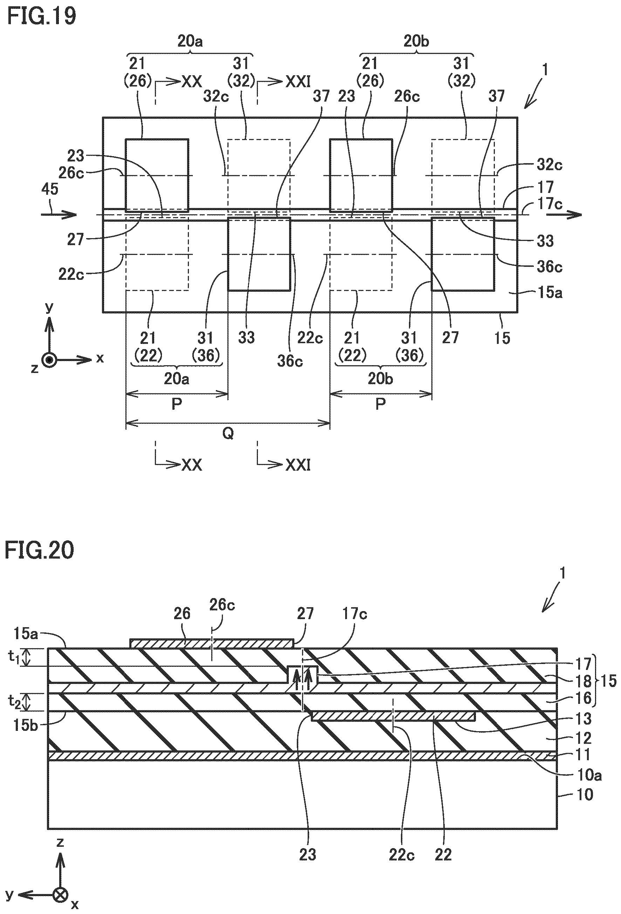

As shown in Figs. 19 and 20, in the width direction of core layer 17 (±y direction), first edge 27 of first upper antenna electrode 26 and second edge 23 of first lower antenna electrode 22 may be located opposite each other with respect to center line 17c of core layer 17. In the width direction of core layer 17 (±y direction), third edge 37 of second upper antenna electrode 36 and fourth edge 33 of second lower antenna electrode 32 may be located opposite each other with respect to center line 17c of core layer 17. In the plan view of first principal surface 15a, first lower antenna electrode 22 may be symmetrically disposed to first upper antenna electrode 26 with respect to center line 17c of core layer 17.

Specifically, in the plan view of first principal surface 15a, first edge 27 of first upper antenna electrode 26 may overlap with core layer 17 and may be shifted in the first width direction (+y direction) with respect to center line 17c of core layer 17. In the plan view of first principal surface 15a, second edge 23 of first lower antenna electrode 22 may overlap with core layer 17 and may be shifted in the second width direction (-y direction) with respect to center line 17c of core layer 17. In the plan view of first principal surface 15a, third edge 37 of second upper antenna electrode 36 may overlap with core layer 17 and may be shifted in the second width direction (-y direction) with respect to center line 17c of core layer 17. In the plan view of first principal surface 15a, fourth edge 33 of second lower antenna electrode 32 may overlap with core layer 17 and may be shifted in the first width direction (+y direction) with respect to center line 17c of core layer 17.

Optical waveguide 15 may include only one of upper clad layer 18 or lower clad layer 16. Optical waveguide 15 may not include both upper clad layer 18 and lower clad layer 16. Antenna electrode pairs 20a and 20b in a number greater than or equal to three pairs may be disposed in electro-optic polymer device 1, or one antenna electrode pair 20a and 20b may be disposed in electro-optic polymer device 1. Second antenna electrode 31 may be omitted, and one first antenna electrode 21 may be disposed in electro-optic polymer device 1.

The effect of electro-optic polymer device 1 of the present embodiment will be described.

Electro-optic polymer device 1 of the present embodiment includes optical waveguide 15 and first antenna electrode 21. Optical waveguide 15 has first principal surface 15a and a second principal surface 15b opposite to first principal surface 15a. Optical waveguide 15 includes core layer 17 formed of the electro-optic polymer. First antenna electrode 21 includes first upper antenna electrode 26 and first lower antenna electrode 22. The electro-optic polymer contains electro-optic molecules. The electro-optic molecules are oriented along the normal direction of first principal surface 15a (z direction). First upper antenna electrode 26 is provided on first principal surface 15a. First upper antenna electrode 26 includes first edge 27 proximate to center line 17c of core layer 17 in the width direction of core layer 17 (±y direction) in the plan view of first principal surface 15a. The width direction of core layer 17 is perpendicular to the longitudinal direction of core layer 17 (x direction) in the plan view of first principal surface 15a. First lower antenna electrode 22 is provided on second principal surface 15b. First lower antenna electrode 22 includes a second edge 23 proximate to center line 17c of core layer 17 in the plan view of first principal surface 15a. In the plan view of first principal surface 15a, first center line 26c of first upper antenna electrode 26 in the width direction of core layer 17 is shifted in the first width direction (+y direction) with respect to center line 17c of core layer 17 in the width direction of core layer 17. The first width direction is one side of the width direction of core layer 17. In the plan view of first principal surface 15a, second center line 22c of first lower antenna electrode 22 in the width direction of core layer 17 is shifted in the second width direction (-y direction), which is opposite to the first width direction with respect to center line 17c of core layer 17. The second width direction is the other side of the width direction of core layer 17. In the plan view of first principal surface 15a, first edge 27 and second edge 23 overlap with core layer 17. First distance t₁ between first upper antenna electrode 26 and core layer 17 in the normal direction of first principal surface 15a (z direction) is less than or equal to 20 µm. Second distance t₂ between first lower antenna electrode 22 and core layer 17 in the normal direction of first principal surface 15a (z direction) is less than or equal to 20 µm.

In the present embodiment, in the plan view of first principal surface 15a, second center line 22c of first lower antenna electrode 22 is shifted in the opposite direction from first center line 26c of first upper antenna electrode 26 with respect to center line 17c of core layer 17. Electromagnetic wave 40 can reach first lower antenna electrode 22 without being blocked by first upper antenna electrode 26. Therefore, first upper antenna electrode 26 and first lower antenna electrode 22 can efficiently receive the electric field component along the width direction of core layer 17 (±y direction) out of electromagnetic wave 40. In the present embodiment, in the plan view of first principal surface 15a, first edge 27 of first upper antenna electrode 26 and second edge 23 of first lower antenna electrode 22 overlap with core layer 17. First distance t₁ is less than or equal to 20 µm, and second distance t₂ is less than or equal to 20 µm. Therefore, the component of the electric field applied from first antenna electrode 21 to core layer 17 along the orientation direction of the electro-optic molecules (z direction) can be increased. In this way, the optical modulation efficiency of electro-optic polymer device 1 is improved.

In electro-optic polymer device 1 of the present embodiment, in the plan view of first principal surface 15a, first edge 27 and second edge 23 coincide with center line 17c of core layer 17.

Therefore, the component of the electric field applied from first antenna electrode 21 to core layer 17 along the orientation direction of the electro-optic molecules (z direction) can be further increased. The optical modulation efficiency of electro-optic polymer device 1 is improved.

In electro-optic polymer device 1 of the present embodiment, in the width direction of core layer 17 (±y direction), first edge 27 and second edge 23 are located opposite each other with respect to center line 17c of core layer 17.

Therefore, electromagnetic wave 40 can reach first lower antenna electrode 22 as well without being blocked by first upper antenna electrode 26. First upper antenna electrode 26 and first lower antenna electrode 22 can efficiently receive the electric field component along the width direction of core layer 17 (±y direction) out of electromagnetic wave 40. It is possible to increase the component of the electric field applied from first antenna electrode 21 to core layer 17 along the orientation direction of the electro-optic molecules (z direction) throughout core layer 17. The optical modulation efficiency of electro-optic polymer device 1 is improved.

Electro-optic polymer device 1 of the present embodiment further includes ground electrode 11 and spacer layer 12. Ground electrode 11 is disposed opposite to first upper antenna electrode 26 with respect to first lower antenna electrode 22 in the normal direction of first principal surface 15a (z direction), and overlaps with first upper antenna electrode 26 and first lower antenna electrode 22 in the plan view of first principal surface 15a. Spacer layer 12 is disposed between ground electrode 11 and first lower antenna electrode 22. Spacer layer 12 is formed of a material having an electrical resistivity greater than 10⁴ Ω·m.

Therefore, the component of the electric field applied from first antenna electrode 21 to core layer 17 along the orientation direction of the electro-optic molecules (z direction) can be increased. The optical modulation efficiency of electro-optic polymer device 1 is improved.

Electro-optic polymer device 1 of the present embodiment further includes second antenna electrode 31. Second antenna electrode 31 is disposed at a spacing from first antenna electrode 21 in the longitudinal direction of core layer 17 (x direction). Second antenna electrode 31 includes second upper antenna electrode 36 and second lower antenna electrode 32. Second upper antenna electrode 36 is provided on first principal surface 15a. Second upper antenna electrode 36 includes a third edge 37 proximate to center line 17c of core layer 17 in the plan view of first principal surface 15a. Second lower antenna electrode 32 is provided on second principal surface 15b. Second lower antenna electrode 32 includes a fourth edge 33 proximate to center line 17c of core layer 17 in the plan view of first principal surface 15a. In the plan view of first principal surface 15a, a third center line 36c of second upper antenna electrode 36 in the width direction of core layer 17 (±y direction) is shifted in the second width direction (-y direction) with respect to center line 17c of core layer 17. In the plan view of first principal surface 15a, fourth center line 32c of second lower antenna electrode 32 in the width direction of core layer 17 is shifted in the first width direction (+y direction) with respect to center line 17c of core layer 17. In the plan view of first principal surface 15a, third edge 37 and fourth edge 33 overlap with core layer 17. Third distance t₃ between second upper antenna electrode 36 and core layer 17 in the normal direction of first principal surface 15a (z direction) is less than or equal to 20 µm. Fourth distance t₄ between second lower antenna electrode 32 and core layer 17 in the normal direction of first principal surface 15a (z direction) is less than or equal to 20 µm.

Therefore, light 45 propagating through core layer 17 is modulated not only by the electric field applied to core layer 17 from first antenna electrode 21 but also by the electric field applied to core layer 17 from second antenna electrode 31. The optical modulation efficiency of electro-optic polymer device 1 is improved.

In electro-optic polymer device 1 of the present embodiment, the plurality of antenna electrode pairs 20a and 20b are periodically arranged along the longitudinal direction of core layer 17 (x direction). Each of the plurality of antenna electrode pairs 20a and 20b includes first antenna electrode 21 and second antenna electrode 31.

Therefore, light 45 propagating through core layer 17 is repeatedly modulated by the electric field applied to core layer 17 from the plurality of antenna electrode pairs 20a and 20b. The optical modulation efficiency of electro-optic polymer device 1 is improved.

In electro-optic polymer device 1 of the present embodiment, optical waveguide 15 includes at least one of upper clad layer 18 or lower clad layer 16. Upper clad layer 18 is disposed between first upper antenna electrode 26 and core layer 17 in the normal direction of first principal surface 15a (z direction), and has a lower refractive index than core layer 17. Lower clad layer 16 is disposed between first lower antenna electrode 22 and core layer 17 in the normal direction of first principal surface 15a (z direction), and has a lower refractive index than core layer 17. At least one of upper clad layer 18 or lower clad layer 16 is formed of a material having an electrical resistivity greater than 10⁴ Ω·m.

At least one of upper clad layer 18 or lower clad layer 16 reduces the absorption of light 45 propagating through core layer 17 by first lower antenna electrode 22 and second lower antenna electrode 32. The absorption of electromagnetic wave 40 by at least one of upper clad layer 18 or lower clad layer 16 is reduced. The component of the electric field applied from first antenna electrode 21 to core layer 17 along the orientation direction of the electro-optic molecules (z direction) can be further increased. The optical modulation efficiency of electro-optic polymer device 1 is improved.

### (Second embodiment)

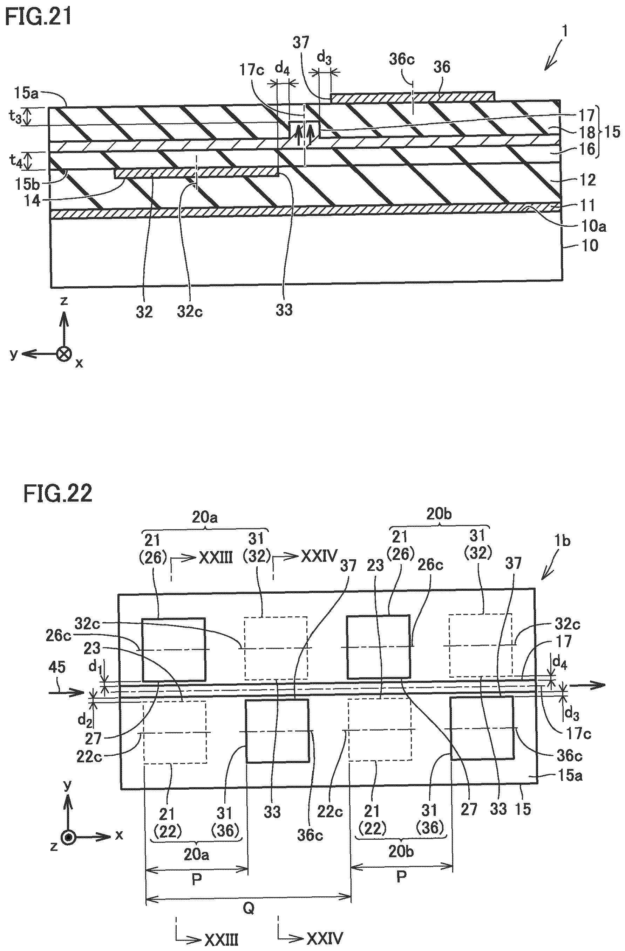

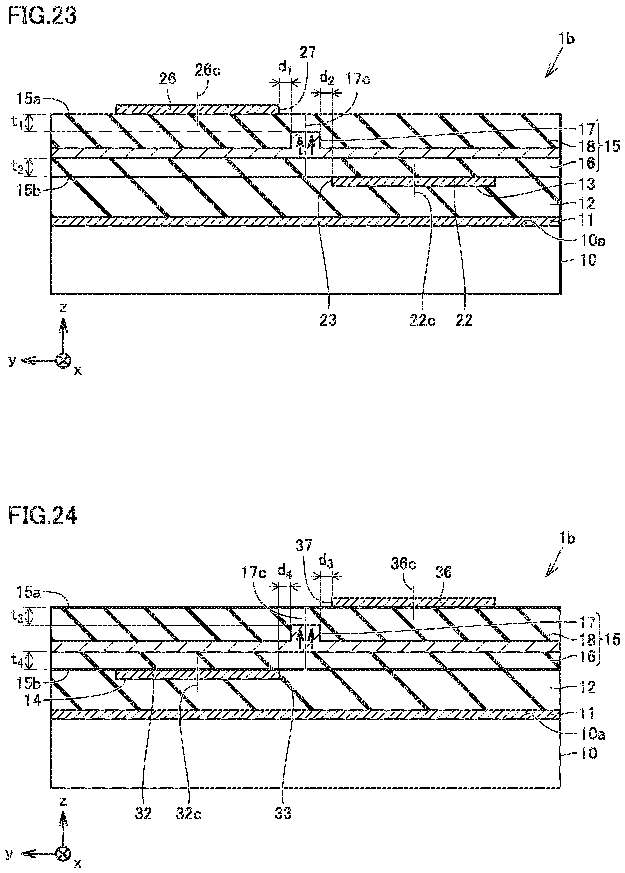

With reference to Figs. 22 to 24, an electro-optic polymer device 1b of the second embodiment will be described. Electro-optic polymer device 1b of the present embodiment has a similar configuration to electro-optic polymer device 1 of the first embodiment, but differs from electro-optic polymer device 1 of the first embodiment mainly in the following points.

In electro-optic polymer device 1b, in the plan view of a first principal surface 15a, a first edge 27 of a first upper antenna electrode 26 and a second edge 23 of a first lower antenna electrode 22 are located opposite each other with respect to a center line 17c of a core layer 17 and are away from core layer 17 in the width direction of core layer 17 (±y direction).

Specifically, first edge 27 of first upper antenna electrode 26 is shifted in a first width direction (+y direction) with respect to center line 17c of core layer 17. First edge 27 of first upper antenna electrode 26 is shifted in the same direction as a first center line 26c of first upper antenna electrode 26 with respect to center line 17c of core layer 17. In the plan view of first principal surface 15a, a distance d₁ between first edge 27 of first upper antenna electrode 26 and core layer 17 is greater than 0 µm and less than or equal to 20 µm. Distance d₁ may be less than or equal to 10 µm, or may be less than or equal to 5 µm.

Second edge 23 of first lower antenna electrode 22 is shifted in a second width direction (-y direction) with respect to center line 17c of core layer 17. Second edge 23 of first lower antenna electrode 22 is shifted in the same direction as a second center line 22c of first lower antenna electrode 22 with respect to center line 17c of core layer 17. In the plan view of first principal surface 15a, a distance d₂ between second edge 23 of first lower antenna electrode 22 and core layer 17 is greater than 0 µm and less than or equal to 20 µm. Distance d₂ may be less than or equal to 10 µm, or may be less than or equal to 5 µm.

In the plan view of first principal surface 15a, a third edge 37 of a second upper antenna electrode 36 and a fourth edge 33 of a second lower antenna electrode 32 are located opposite each other with respect to center line 17c of core layer 17 and are away from core layer 17 in the width direction of core layer 17 (±y direction).

Specifically, third edge 37 of second upper antenna electrode 36 is shifted in the second width direction (-y direction) with respect to center line 17c of core layer 17. Third edge 37 of second upper antenna electrode 36 is shifted in the same direction as a third center line 36c of second upper antenna electrode 36 with respect to center line 17c of core layer 17. In the plan view of first principal surface 15a, a distance d₃ between third edge 37 of second upper antenna electrode 36 and core layer 17 is greater than 0 µm and less than or equal to 20 µm. Distance d₃ may be less than or equal to 10 µm, or may be less than or equal to 5 µm.

Fourth edge 33 of second lower antenna electrode 32 is shifted in the first width direction (+y direction) with respect to center line 17c of core layer 17. Fourth edge 33 of second lower antenna electrode 32 is shifted in the same direction as a fourth center line 32c of second lower antenna electrode 32 with respect to center line 17c of core layer 17. In the plan view of first principal surface 15a, a distance d₄ between fourth edge 33 of second lower antenna electrode 32 and core layer 17 is greater than 0 µm and less than or equal to 20 µm. Distance d₄ may be less than or equal to 10 µm, or may be less than or equal to 5 µm.

Electro-optic polymer device 1b of the present embodiment has an effect in a similar manner to electro-optic polymer device 1 of the first embodiment, as follows.

For example, in electro-optic polymer device 1b, in the width direction of core layer 17 (±y direction), first edge 27 and second edge 23 are located opposite each other with respect to center line 17c of core layer 17. Therefore, core layer 17 is positioned on a straight line connecting the portion of first edge 27 of first upper antenna electrode 26 that contacts optical waveguide 15 (corner of first upper antenna electrode 26) and the portion of second edge 23 of first lower antenna electrode 22 that contacts optical waveguide 15 (corner of first lower antenna electrode 22). Furthermore, in the plan view of first principal surface 15a, distance d₁ between first edge 27 of first upper antenna electrode 26 and core layer 17 is less than or equal to 20 µm, and distance d₂ between second edge 23 of first lower antenna electrode 22 and core layer 17 is less than or equal to 20 µm. Therefore, the direction of the electric field applied to core layer 17 by first upper antenna electrode 26 and first lower antenna electrode 22 becomes more parallel to the orientation direction of the electro-optic molecules (normal direction of first principal surface 15a (z direction)). The component of the electric field applied from first antenna electrode 21 to core layer 17 along the orientation direction of the electro-optic molecules (z direction) can be increased.

A second antenna electrode 31 (second upper antenna electrode 36 and second lower antenna electrode 32) can also increase the component of the electric field applied from second antenna electrode 31 to core layer 17 along the orientation direction of the electro-optic molecules (z direction), in a similar manner to first antenna electrode 21 (first upper antenna electrode 26 and first lower antenna electrode 22). In this way, light 45 propagating through core layer 17 is efficiently modulated by the electric field based on an electromagnetic wave 40 received by first antenna electrode 21 and second antenna electrode 31. The optical modulation efficiency of electro-optic polymer device 1b is improved.

### (Variant)

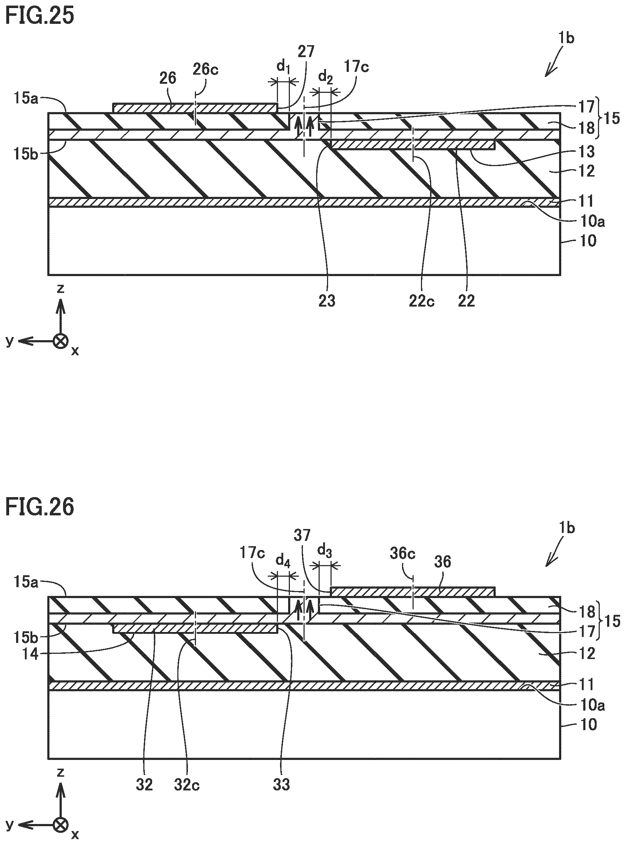

As shown in Figs. 25 and 26, in a first variant of the present embodiment, first upper antenna electrode 26, first lower antenna electrode 22, second upper antenna electrode 36 (not shown), and second lower antenna electrode 32 (not shown) may contact core layer 17. That is, lower clad layer 16 may be omitted, and upper clad layer 18 may not be provided on core layer 17. Therefore, the component of the electric field applied from first antenna electrode 21 and second antenna electrode 31 to core layer 17 along the orientation direction of the electro-optic molecules (z direction) can be increased.

In a second variant of the present embodiment, in the plan view of first principal surface 15a, first edge 27 may be at a distance of less than or equal to 20 µm from core layer 17 in the width direction of core layer 17 (±y direction), and second edge 23 may overlap with core layer 17. In a third variant of the present embodiment, in the plan view of first principal surface 15a, first edge 27 may overlap with core layer 17, and second edge 23 may be at a distance of less than or equal to 20 µm from core layer 17 in the width direction of core layer 17 (±y direction). In the second and third variants of the present embodiment, the component of the electric field applied from first antenna electrode 21 and second antenna electrode 31 to core layer 17 along the orientation direction of the electro-optic molecules (z direction) can be increased.

Electro-optic polymer device 1b of the present embodiment has the following effect in a similar manner to electro-optic polymer device 1 of the first embodiment.

In electro-optic polymer device 1b of the present embodiment, in the plan view of first principal surface 15a, first edge 27 overlaps with core layer 17 or is at a distance of less than or equal to 20 µm from core layer 17 in the width direction of core layer 17 (±y direction). In the plan view of first principal surface 15a, second edge 23 overlaps with core layer 17 or is at a distance of less than or equal to 20 µm from core layer 17 in the width direction of core layer 17 (±y direction). First distance t₁ between first upper antenna electrode 26 and core layer 17 in the normal direction of first principal surface 15a (z direction) is less than or equal to 20 µm. Second distance t₂ between first lower antenna electrode 22 and core layer 17 in the normal direction of first principal surface 15a (z direction) is less than or equal to 20 µm.

Therefore, electromagnetic wave 40 can reach first lower antenna electrode 22 as well without being blocked by first upper antenna electrode 26. First upper antenna electrode 26 and first lower antenna electrode 22 can efficiently receive the electric field component along the width direction of core layer 17 (±y direction) out of electromagnetic wave 40. The component of the electric field applied from first antenna electrode 21 to core layer 17 along the orientation direction of the electro-optic molecules (z direction) can be increased.

In electro-optic polymer device 1b of the present embodiment, in the width direction of core layer 17 (±y direction), first edge 27 and second edge 23 are located opposite each other with respect to center line 17c of core layer 17.

Therefore, it is possible to increase the component of the electric field applied from first antenna electrode 21 to core layer 17 along the orientation direction of the electro-optic molecules throughout core layer 17. The optical modulation efficiency of electro-optic polymer device 1b is improved.

In electro-optic polymer device 1b of the present embodiment, in the plan view of first principal surface 15a, third edge 37 overlaps with core layer 17 or is at a distance of less than or equal to 20 µm from core layer 17 in the width direction of core layer 17 (±y direction). In the plan view of first principal surface 15a, fourth edge 33 overlaps with core layer 17 or is at a distance of less than or equal to 20 µm from core layer 17 in the width direction of core layer 17 (±y direction). Third distance t₃ between second upper antenna electrode 36 and core layer 17 in the normal direction of first principal surface 15a (z direction) is less than or equal to 20 µm. Fourth distance t₄ between second lower antenna electrode 32 and core layer 17 in the normal direction of first principal surface 15a (z direction) is less than or equal to 20 µm.

Therefore, light 45 propagating through core layer 17 is modulated not only by the electric field applied to core layer 17 from first antenna electrode 21 but also by the electric field applied to core layer 17 from second antenna electrode 31. The optical modulation efficiency of electro-optic polymer device 1b is improved.

### (Third embodiment)

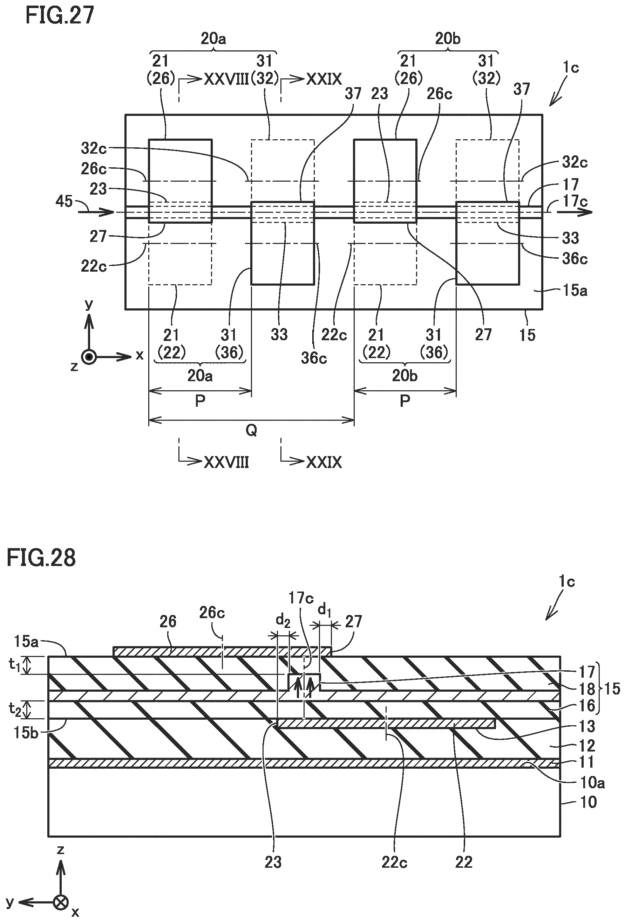

With reference to Figs. 27 to 29, an electro-optic polymer device 1c of the third embodiment will be described. Electro-optic polymer device 1c of the present embodiment has a similar configuration to electro-optic polymer device 1b of the second embodiment, but differs from electro-optic polymer device 1b of the second embodiment mainly in the following points.

A first edge 27 of a first upper antenna electrode 26 is shifted in a first width direction (-y direction) with respect to a center line 17c of a core layer 17. First edge 27 of first upper antenna electrode 26 is shifted in the opposite direction of a first center line 26c of first upper antenna electrode 26 with respect to center line 17c of core layer 17. In the plan view of a first principal surface 15a, a distance d₁ between first edge 27 of first upper antenna electrode 26 and core layer 17 is greater than 0 µm and less than or equal to 20 µm, in a similar manner to the second embodiment. Distance d₁ may be less than or equal to 10 µm, or may be less than or equal to 5 µm, in a similar manner to the second embodiment.

A second edge 23 of a first lower antenna electrode 22 is shifted in the first width direction (+y direction) with respect to center line 17c of core layer 17. Second edge 23 of first lower antenna electrode 22 is shifted in the opposite direction of a second center line 22c of first lower antenna electrode 22 with respect to center line 17c of core layer 17. In the plan view of first principal surface 15a, a distance d₂ between second edge 23 of first lower antenna electrode 22 and core layer 17 is greater than 0 µm and less than or equal to 20 µm, in a similar manner to the second embodiment. Distance d₂ may be less than or equal to 10 µm, or may be less than or equal to 5 µm, in a similar manner to the second embodiment.

Since the overlap between first upper antenna electrode 26 and first lower antenna electrode 22 in the plan view of first principal surface 15a increases, the size of first antenna electrode 21 decreases. Electro-optic polymer device 1c can be miniaturized.

A third edge 37 of a second upper antenna electrode 36 is shifted in the first width direction (+y direction) with respect to center line 17c of core layer 17. Third edge 37 of second upper antenna electrode 36 is shifted in the opposite direction of a third center line 36c of second upper antenna electrode 36 with respect to center line 17c of core layer 17. In the plan view of first principal surface 15a, a distance d₃ between third edge 37 of second upper antenna electrode 36 and core layer 17 is greater than 0 µm and less than or equal to 20 µm, in a similar manner to the second embodiment. Distance d₃ may be less than or equal to 10 µm, or may be less than or equal to 5 µm, in a similar manner to the second embodiment.

A fourth edge 33 of a second lower antenna electrode 32 is shifted in the second width direction (-y direction) with respect to center line 17c of core layer 17. Fourth edge 33 of second lower antenna electrode 32 is shifted in the opposite direction of a fourth center line 32c of second lower antenna electrode 32 with respect to center line 17c of core layer 17. In the plan view of first principal surface 15a, a distance d₄ between fourth edge 33 of second lower antenna electrode 32 and core layer 17 is greater than 0 µm and less than or equal to 20 µm, in a similar manner to the second embodiment. Distance d₄ may be less than or equal to 10 µm, or may be less than or equal to 5 µm, in a similar manner to the second embodiment.

Since the overlap between second upper antenna electrode 36 and second lower antenna electrode 32 in the plan view of first principal surface 15a increases, the size of a second antenna electrode 31 decreases. Electro-optic polymer device 1c can be miniaturized.

### (Variant)

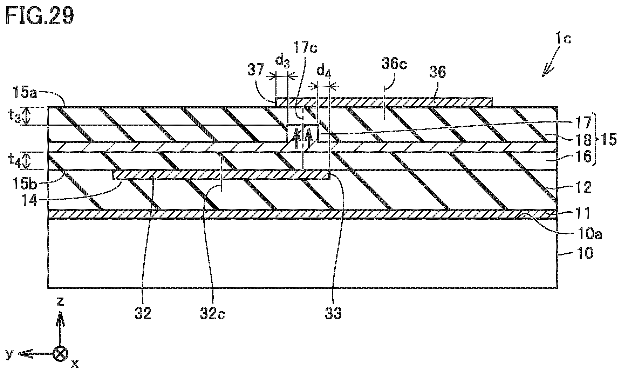

In a first variant of the present embodiment, as shown in Figs. 28 and 29, first upper antenna electrode 26, first lower antenna electrode 22, second upper antenna electrode 36 (not shown), and second lower antenna electrode 32 (not shown) may contact core layer 17. That is, lower clad layer 16 may be omitted, and upper clad layer 18 may not be provided on core layer 17. Therefore, the component of the electric field applied from first antenna electrode 21 and second antenna electrode 31 to core layer 17 along the orientation direction of the electro-optic molecules (z direction) can be increased.

In a second variant of the present embodiment, in the plan view of first principal surface 15a, first edge 27 may be at a distance of less than or equal to 20 µm from core layer 17 in the width direction of core layer 17 (±y direction), and second edge 23 may overlap with core layer 17. In a third variant of the present embodiment, in the plan view of first principal surface 15a, first edge 27 may overlap with core layer 17, and second edge 23 may be at a distance of less than or equal to 20 µm from core layer 17 in the width direction of core layer 17 (±y direction). In the second and third variants of the present embodiment, the component of the electric field applied from first antenna electrode 21 and second antenna electrode 31 to core layer 17 along the orientation direction of the electro-optic molecules (z direction) can be increased.

Electro-optic polymer device 1c of the present embodiment has the following effect in a similar manner to electro-optic polymer device 1b of the second embodiment.

In electro-optic polymer device 1c of the present embodiment, in the plan view of first principal surface 15a, first edge 27 overlaps with core layer 17 or is at a distance of less than or equal to 20 µm from core layer 17 in the width direction of core layer 17 (±y direction). In the plan view of first principal surface 15a, second edge 23 overlaps with core layer 17 or is at a distance of less than or equal to 20 µm from core layer 17 in the width direction of core layer 17 (±y direction). First distance t₁ between first upper antenna electrode 26 and core layer 17 in the normal direction of first principal surface 15a (z direction) is less than or equal to 20 µm. Second distance t₂ between first lower antenna electrode 22 and core layer 17 in the normal direction of first principal surface 15a (z direction) is less than or equal to 20 µm.

Therefore, electromagnetic wave 40 can reach first lower antenna electrode 22 as well without being blocked by first upper antenna electrode 26. First upper antenna electrode 26 and first lower antenna electrode 22 can efficiently receive the electric field component along the width direction of core layer 17 (±y direction) out of electromagnetic wave 40. The component of the electric field applied from first antenna electrode 21 to core layer 17 along the orientation direction of the electro-optic molecules (z direction) can be increased.

In electro-optic polymer device 1c of the present embodiment, in the width direction of core layer 17 (±y direction), first edge 27 and second edge 23 are located opposite each other with respect to center line 17c of core layer 17.

Therefore, it is possible to increase the component of the electric field applied from first antenna electrode 21 to core layer 17 along the orientation direction of the electro-optic molecules throughout core layer 17. The optical modulation efficiency of electro-optic polymer device 1c is improved. Since the overlap between first upper antenna electrode 26 and first lower antenna electrode 22 in the plan view of first principal surface 15a increases, the size of first antenna electrode 21 decreases. Electro-optic polymer device 1c can be miniaturized.

In electro-optic polymer device 1c of the present embodiment, in the plan view of first principal surface 15a, third edge 37 overlaps with core layer 17 or is at a distance of less than or equal to 20 µm from core layer 17 in the width direction of core layer 17 (±y direction). In the plan view of first principal surface 15a, fourth edge 33 overlaps with core layer 17 or is at a distance of less than or equal to 20 µm from core layer 17 in the width direction of core layer 17 (±y direction). Third distance t₃ between second upper antenna electrode 36 and core layer 17 in the normal direction of first principal surface 15a (z direction) is less than or equal to 20 µm. Fourth distance t₄ between second lower antenna electrode 32 and core layer 17 in the normal direction of first principal surface 15a (z direction) is less than or equal to 20 µm.

Therefore, light 45 propagating through core layer 17 is modulated not only by the electric field applied to core layer 17 from first antenna electrode 21 but also by the electric field applied to core layer 17 from second antenna electrode 31. The optical modulation efficiency of electro-optic polymer device 1c is improved.

### (Fourth embodiment)

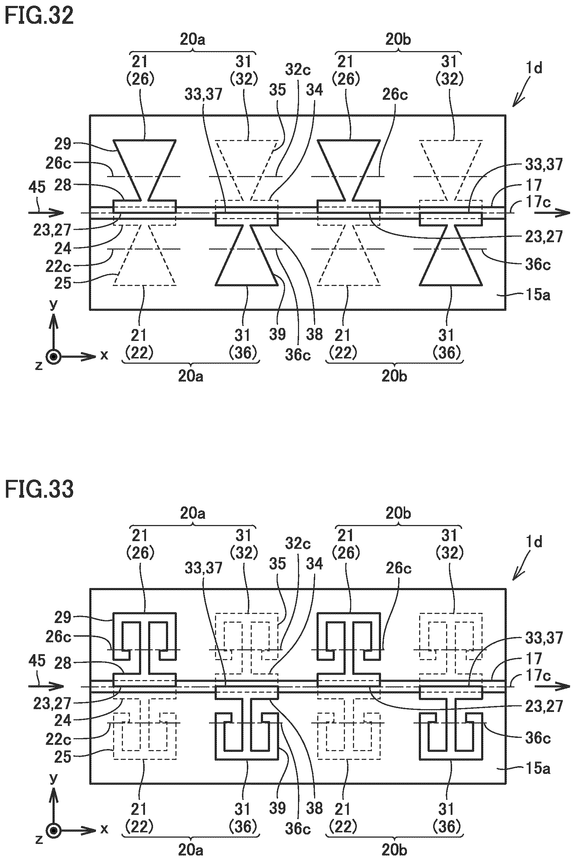

With reference to Fig. 32, an electro-optic polymer device 1d of the fourth embodiment will be described. Electro-optic polymer device 1d of the present embodiment has a similar configuration to electro-optic polymer device 1 of the first embodiment and has a similar effect to electro-optic polymer device 1 of the first embodiment, but differs from electro-optic polymer device 1 of the first embodiment mainly in the following points.

In electro-optic polymer device 1d, a first upper antenna electrode 26, a first lower antenna electrode 22, a second upper antenna electrode 36, and a second lower antenna electrode 32 each include a bowtie antenna.

Specifically, first upper antenna electrode 26 includes an antenna 29 and a modulation electrode 28. Antenna 29 receives an electromagnetic wave 40 (refer to Figs. 2, 3, and 14). Antenna 29 is a bowtie antenna. The shape of antenna 29 is not particularly limited. In plan view of a first principal surface 15a, antenna 29 may have a larger area than modulation electrode 28. In the plan view of first principal surface 15a, modulation electrode 28 may have a slender stripe shape in the longitudinal direction of a core layer 17 (x direction). The shape of modulation electrode 28 is not particularly limited. Modulation electrode 28 is connected to antenna 29 and is more proximate to a center line 17c of core layer 17 than antenna 29 in the width direction of core layer 17 (±y direction). Modulation electrode 28 applies the electric field based on electromagnetic wave 40 received by antenna 29 to core layer 17.

First lower antenna electrode 22 includes an antenna 25 and a modulation electrode 24. Antenna 25 receives electromagnetic wave 40 (refer to Figs. 2, 3, and 14). Antenna 25 is a bowtie antenna. The shape of antenna 25 is not particularly limited. In the plan view of first principal surface 15a, antenna 25 may have a larger area than modulation electrode 24. In the plan view of first principal surface 15a, modulation electrode 24 may have a slender stripe shape in the longitudinal direction of core layer 17 (x direction). The shape of modulation electrode 24 is not particularly limited. Modulation electrode 24 is connected to antenna 25 and is more proximate to center line 17c of core layer 17 than antenna 25 in the width direction of core layer 17 (±y direction). Modulation electrode 24 applies the electric field based on electromagnetic wave 40 received by antenna 25 to core layer 17.

Second upper antenna electrode 36 includes an antenna 39 and a modulation electrode 38. Antenna 39 receives electromagnetic wave 40 (refer to Figs. 2, 3, and 14). Antenna 39 is a bowtie antenna. The shape of antenna 39 is not particularly limited. In the plan view of first principal surface 15a, antenna 39 may have a larger area than modulation electrode 38. In the plan view of first principal surface 15a, modulation electrode 38 may have a slender stripe shape in the longitudinal direction of core layer 17 (x direction). The shape of modulation electrode 38 is not particularly limited. Modulation electrode 38 is connected to antenna 39 and is more proximate to center line 17c of core layer 17 than antenna 39 in the width direction of core layer 17 (±y direction). Modulation electrode 38 applies the electric field based on electromagnetic wave 40 received by antenna 39 to core layer 17.

First lower antenna electrode 22 includes an antenna 35 and a modulation electrode 34. Antenna 35 receives electromagnetic wave 40 (refer to Figs. 2, 3, and 14). Antenna 35 is a bowtie antenna. The shape of antenna 35 is not particularly limited. In the plan view of first principal surface 15a, antenna 35 may have a larger area than modulation electrode 34. In the plan view of first principal surface 15a, modulation electrode 34 may have a slender stripe shape in the longitudinal direction of core layer 17 (x direction). The shape of modulation electrode 34 is not particularly limited. Modulation electrode 34 is connected to antenna 35 and is more proximate to center line 17c of core layer 17 than antenna 35 in the width direction of core layer 17 (±y direction). Modulation electrode 34 applies the electric field based on electromagnetic wave 40 received by antenna 35 to core layer 17.

### (Variant)

As shown in Fig. 33, first upper antenna electrode 26, first lower antenna electrode 22, second upper antenna electrode 36, and second lower antenna electrode 32 may each include a metamaterial antenna. Specifically, antennas 25, 29, 35, and 39 are each a metamaterial antenna.

### (Example)

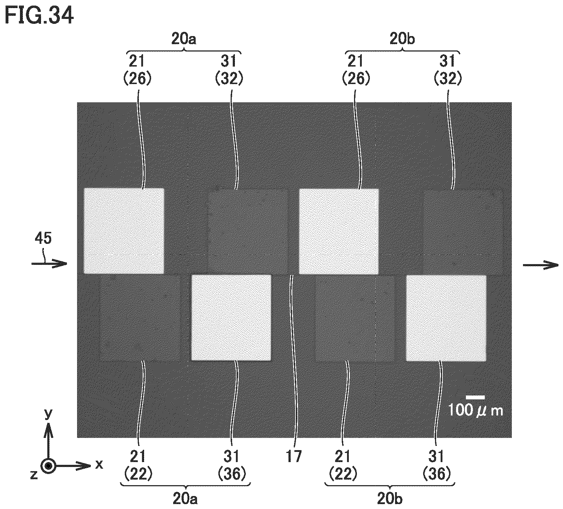

With reference to Figs. 34 to 36, the electro-optic polymer device of the example of the present disclosure will be described. The electro-optic polymer device of the present example is configured in a similar manner to the electro-optic polymer device of the third variant of the second embodiment and is produced by the production method shown in Figs. 4 to 13.

Core layer 17 is a ridge-type core layer. The height of core layer 17 in the normal direction of first principal surface 15a (z direction) is 2 µm. The width of core layer 17 is 1.6 µm. As the electro-optic polymer forming core layer 17, the side chain type electro-optic polymer having repeating units represented by the formulae (1) to (3) is used. The electro-optic coefficient of the electro-optic polymer estimated by the transparent ellipsometry method at a wavelength of 1550 nm is 36 pm/V. Lower clad layer 16 is formed of a cycloolefin polymer (ZEONEX (registered trademark of Zeon Corporation)). The electrical resistivity of cycloolefin polymer is greater than 10¹² Ω·m. Upper clad layer 18 is formed of a UV-cured resin (FE4048, manufactured by NTT Advanced Technology Corporation).

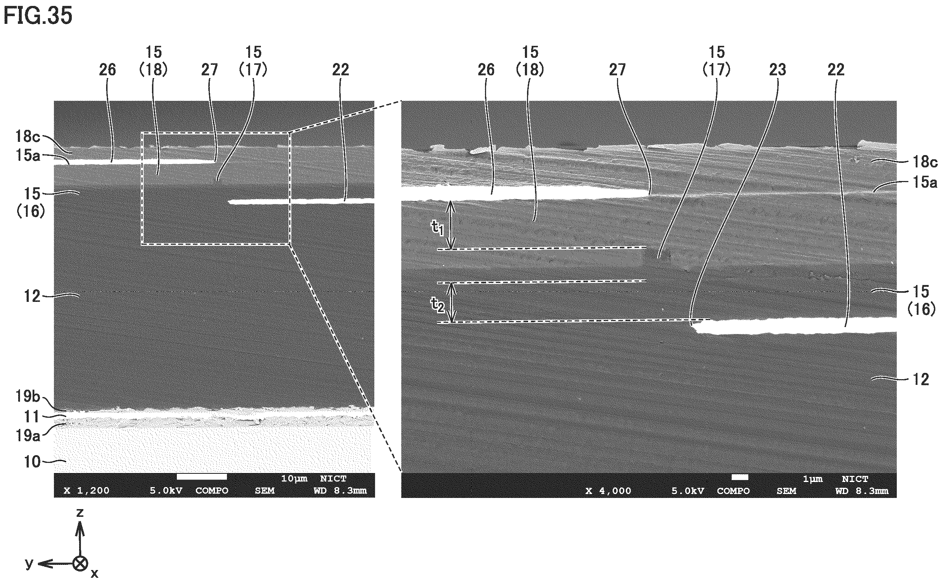

Ground electrode 11, first upper antenna electrode 26, first lower antenna electrode 22, second upper antenna electrode 36, and second lower antenna electrode 32 are formed of gold (Au). Substrate 10 is formed of silicon (Si). With reference to Fig. 35, a silicon dioxide (SiO₂) film 19a is formed on the surface of substrate 10, and silicon dioxide (SiO₂) film 19a is disposed between substrate 10 and ground electrode 11. Silicon dioxide (SiO₂) film 19b covers ground electrode 11. Silicon dioxide (SiO₂) film 19b is disposed between ground electrode 11 and spacer layer 12. Spacer layer 12 is formed of a cycloolefin polymer (ZEONOR (registered trademark of Zeon Corporation)). A protective layer 18c is formed on first upper antenna electrode 26, second upper antenna electrode 36, and upper clad layer 18. Protective layer 18c is formed of the UV-cured resin (FE4048, manufactured by NTT Advanced Technology Corporation).

With reference to Fig. 35, first distance t₁ between first upper antenna electrode 26 and core layer 17 in the normal direction of first principal surface 15a (z direction) is 3 µm. Second distance t₂ between first lower antenna electrode 22 and core layer 17 in the normal direction of first principal surface 15a (z direction) is 2.5 µm. Third distance t₃ between second upper antenna electrode 36 and core layer 17 in the normal direction of first principal surface 15a (z direction) is the same as second distance t₂, which is 2.5 µm. Fourth distance t₄ between second lower antenna electrode 32 and core layer 17 in the normal direction of first principal surface 15a (z direction) is the same as first distance ti, which is 3 µm.

In the plan view of first principal surface 15a, a first edge 27 of first upper antenna electrode 26 overlaps with core layer 17. The distance between first edge 27 of first upper antenna electrode 26 and center line 17c of core layer 17 is 0.4 µm. A second edge 23 of first lower antenna electrode 22 is away from core layer 17 in the width direction of core layer 17 (±y direction). In the plan view of first principal surface 15a, distance d₂ between second edge 23 of first lower antenna electrode 22 and core layer 17 is 1.3 µm. In the plan view of first principal surface 15a, third edge 37 of second upper antenna electrode 36 overlaps with core layer 17, similarly to first edge 27. The distance between third edge 37 of second upper antenna electrode 36 and center line 17c of core layer 17 is 0.4 µm. In the plan view of first principal surface 15a, distance d₄ between fourth edge 33 of second lower antenna electrode 32 and core layer 17 is the same as distance d₂, which is 1.3 µm.

With reference to Fig. 34, an arrangement pitch P between first antenna electrode 21 and second antenna electrode 31 is 0.59 mm. Arrangement period Q of the plurality of antenna electrode pairs 20a and 20b is 1.18 mm.

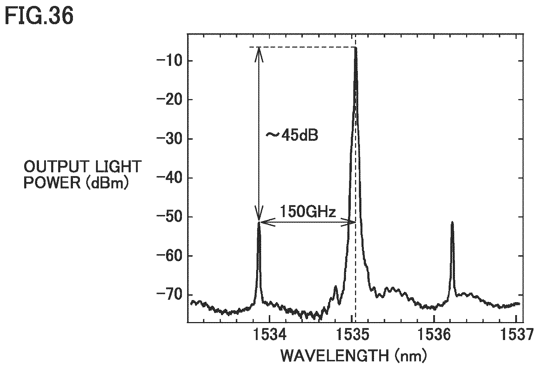

In this example, light 45 is laser light with power of 8 mW and a wavelength of 1.535 µm. The laser light is incident on the electro-optic polymer device through a tapered lensed fiber (not shown). The polarization direction of the laser light is the normal direction of first principal surface 15a (z direction). The electro-optic polymer device is irradiated with an electromagnetic wave having a frequency of 150 GHz from above the electro-optic polymer device (see Figs. 2, 3, and the like). The power density of the electromagnetic wave on the surface of the electro-optic polymer device where the electromagnetic wave is incident is 34.3 W/m². The laser light incident on the electro-optic polymer device is modulated by the electro-optic polymer device. The light modulated by the electro-optic polymer device is output from the electro-optic polymer device through the tapered lensed fiber (not shown). The spectrum of the output light from the electro-optic polymer device is measured using a light spectrum analyzer. As shown in Fig. 36, in the spectrum of the output light from the electro-optic polymer device, an optical modulation sideband having a carrier sideband ratio of 45 dB was observed at a frequency 150 GHz away from the frequency of the laser light incident on the electro-optic polymer device.

The first to fourth embodiments and the variants thereof disclosed this time should be considered as illustrative in all respects and not restrictive. As long as there is no contradiction, at least two of the first to fourth embodiments and the variants thereof disclosed this time may be combined. For example, in the second and third embodiments, first upper antenna electrode 26, first lower antenna electrode 22, second upper antenna electrode 36, and second lower antenna electrode 32 may each include a bowtie antenna or metamaterial antenna, as in the fourth embodiment. The scope of the present disclosure is indicated by the claims, rather than the above description, and is intended to include all modifications within the meaning and scope equivalent to the claims.

### REFERENCE SIGNS LIST

1, 1b, 1c, 1d: electro-optic polymer device, 10: substrate, 10a: principal surface, 11: ground electrode, 12: spacer layer, 13, 14: recess portion, 15: optical waveguide, 15a: first principal surface, 15b: second principal surface, 16: lower clad layer, 17: core layer, 17c: center line, 18: upper clad layer, 18c: protective layer, 19a, 19b: silicon dioxide film, 20a, 20b: antenna electrode pair, 21: first antenna electrode, 22: first lower antenna electrode, 22c: second center line, 23: second edge, 24: modulation electrode, 25: antenna, 26: first upper antenna electrode, 26c: first center line, 27: first edge, 28: modulation electrode, 29: antenna, 31: second antenna electrode, 32: second lower antenna electrode, 32c: fourth center line, 33: fourth edge, 34: modulation electrode, 35: antenna, 36: second upper antenna electrode, 36c: third center line, 37: third edge, 38: modulation electrode, 39: antenna, 40: electromagnetic wave, 41a, 41b: peak, 42a, 42b: trough, 45: light, 50: support body, 51: lower electrode, 52, 55: electro-optic polymer layer, 53: upper electrode, 54: power supply.

## Claims

1. An electro-optic polymer device comprising:
an optical waveguide having a first principal surface and a second principal surface opposite to the first principal surface, and including a core layer formed of an electro-optic polymer; and
a first antenna electrode including a first upper antenna electrode and a first lower antenna electrode,
wherein
the electro-optic polymer contains an electro-optic molecule, and the electro-optic molecule is oriented along a normal direction of the first principal surface,
the first upper antenna electrode is provided on the first principal surface and includes a first edge proximate to a center line of the core layer in a width direction of the core layer in plan view of the first principal surface, and the width direction of the core layer is perpendicular to a longitudinal direction of the core layer in the plan view of the first principal surface,
the first lower antenna electrode is provided on the second principal surface and includes a second edge proximate to the center line of the core layer in the plan view of the first principal surface,
in the plan view of the first principal surface, a first center line of the first upper antenna electrode in the width direction of the core layer is shifted in a first width direction with respect to the center line of the core layer in the width direction of the core layer, and the first width direction is one side of the width direction,
in the plan view of the first principal surface, a second center line of the first lower antenna electrode in the width direction of the core layer is shifted in a second width direction opposite to the first width direction with respect to the center line of the core layer, and the second width direction is the other side of the width direction,
in the plan view of the first principal surface, the first edge overlaps with the core layer or is at a distance of less than or equal to 20 µm from the core layer in the width direction of the core layer,
in the plan view of the first principal surface, the second edge overlaps with the core layer or is at a distance of less than or equal to 20 µm from the core layer in the width direction of the core layer,
a first distance between the first upper antenna electrode and the core layer in the normal direction of the first principal surface is less than or equal to 20 µm, and
a second distance between the first lower antenna electrode and the core layer in the normal direction of the first principal surface is less than or equal to 20 µm.

2. The electro-optic polymer device according to claim 1, wherein in the width direction of the core layer, the first edge and the second edge coincide with the center line of the core layer or are located opposite each other with respect to the center line of the core layer.

3. The electro-optic polymer device according to claim 1 or 2, further comprising:
a ground electrode; and
a spacer layer disposed between the ground electrode and the first lower antenna electrode,
wherein
the ground electrode is disposed opposite to the first upper antenna electrode with respect to the first lower antenna electrode in the normal direction of the first principal surface, and overlaps with the first upper antenna electrode and the first lower antenna electrode in the plan view of the first principal surface, and
the spacer layer is formed of a material having an electrical resistivity greater than 10⁴ Ω·m.

4. The electro-optic polymer device according to any one of claims 1 to 3, further comprising a second antenna electrode disposed at a spacing from the first antenna electrode in the longitudinal direction of the core layer,
wherein
the second antenna electrode includes a second upper antenna electrode and a second lower antenna electrode,
the second upper antenna electrode is provided on the first principal surface and includes a third edge proximate to the center line of the core layer in the plan view of the first principal surface,
the second lower antenna electrode is provided on the second principal surface and includes a fourth edge proximate to the center line of the core layer in the plan view of the first principal surface,
in the plan view of the first principal surface, a third center line of the second upper antenna electrode in the width direction of the core layer is shifted in the second width direction with respect to the center line of the core layer,
in the plan view of the first principal surface, a fourth center line of the second lower antenna electrode in the width direction of the core layer is shifted in the first width direction with respect to the center line of the core layer,
in the plan view of the first principal surface, the third edge overlaps with the core layer or is at a distance of less than or equal to 20 µm from the core layer in the width direction of the core layer,
in the plan view of the first principal surface, the fourth edge overlaps with the core layer or is at a distance of less than or equal to 20 µm from the core layer in the width direction of the core layer,
a third distance between the second upper antenna electrode and the core layer in the normal direction of the first principal surface is less than or equal to 20 µm, and
a fourth distance between the second lower antenna electrode and the core layer in the normal direction of the first principal surface is less than or equal to 20 µm.

5. The electro-optic polymer device according to claim 4, wherein
a plurality of antenna electrode pairs are periodically arranged along the longitudinal direction of the core layer, and
each of the plurality of antenna electrode pairs includes the first antenna electrode and the second antenna electrode.

6. The electro-optic polymer device according to any one of claims 1 to 5, wherein
the optical waveguide includes at least one of an upper clad layer or a lower clad layer,
the upper clad layer is disposed between the first upper antenna electrode and the core layer in the normal direction of the first principal surface and has a lower refractive index than the core layer,
the lower clad layer is disposed between the first lower antenna electrode and the core layer in the normal direction of the first principal surface and has a lower refractive index than the core layer, and
the at least one of the upper clad layer or the lower clad layer is formed of a material having an electrical resistivity greater than 10⁴ Ω·m.

7. The electro-optic polymer device according to any one of claims 1 to 6, wherein the first upper antenna electrode and the first lower antenna electrode each include a rectangular antenna, a bowtie antenna, or a metamaterial antenna.
